# EUROPEAN PATENT SPECIFICATION

(11) **EP 1 546 616 B1**
(45) Date of publication and mention of the grant of the patent: **20.05.2009**
(21) Application number: 03793601.0
(22) Date of filing: 09.06.2003
(51) Int. Cl.: F24J 2/07, F24J 2/28, F24J 2/48, F24J 2/52

(54) **COMBINED AND SIMPLIFIED CERAMIC OR METALLIC VOLUMETRIC ABSORBER MODULES**
KOMBINIERTE UND VEREINFACHTE KERAMISCHE ODER METALLISCHE VOLUMETRISCHE ABSORBERMODULE
MODULES D'ABSORBEURS VOLUMETRIQUES CERAMIQUES OU METALLIQUES COMBINES ET SIMPLIFIES

(30) Priority: 06.09.2002 WO PCT/DK02/00584; 06.09.2002 WO PCT/DK02/00585; 10.02.2003 DK 200300179; 12.03.2003 DK 200300377
(43) Date of publication of application: 29.06.2005
(73) Proprietor: Kraftanlagen München GmbH, 80339 München (DE)
(72) Inventor: STOBBE, Per, DK-2840 Holte (DK); HOFFSCHMIDT, Bernhard, 51467 Bergisch Gladbach (DE)
(74) Representative: Bohnenberger, Johannes
(86) International application number: PCT/DK2003/000373
(87) International publication number: WO 2004/023048

(56) References cited:
- US-A- 5 483 950
- US-A- 5 894 838
- US-A- 6 003 508

## Description

### Field of the invention

Generally, the present invention relates to Solar Thermal Power Plants having a receiver surface heated by reflected radiation from the sun, wherein said receiver surface comprises a plurality of volumetric absorber modules each having an inlet and an outlet and a supporting structure and a fluid permeable interior there between, through which an energy-carrying fluid medium such as air, is passed and heated to such temperatures that it is capable to generate power or process steam. More particular the invention relates to a volumetric air receiver design or principle for use in such solar power plants incorporating absorber modules having support members so as to constitute a Volumetric Receiver unit (VR-unit) or assembly.

Such volumetric absorber modules have been tested as a honeycomb structure made from silicon silicon carbide with excellent results in the HitRec and SolAir research project. Furthermore, honeycomb structures have been tested made from Cordierite, re-crystallised silicon carbide, metal wire mesh, metal screens, metal foil and ceramic foam structures made from silicon nitride and silicon silicon carbide by Deutches Zentrum für Luft und Raumfart in Cologne, without reaching the commercial stage.

### Background of the invention

Solar Thermal Power Plants are currently used for the conversion of short wave electro-magnetic radiation from the sun into electricity. Several technologies may be used in this conversion process. One of these technologies comprises adjustable mirrors, which reflect radiation from the sun and by continuous adjustments concentrate the radiation onto a receiver or absorber surface, which is thus heated. Flowing a liquid or gaseous heat-collecting medium, such as water, molten salt, sodium, a gas or air, against or through the receiver surface, cools it and heats the heat-collecting medium. Once heated the heat-collecting medium may be passed through a heat exchanger or converter to generate steam, which is passed through a steam engine or turbine connected with an electric generator to produce electricity. Preferably, the heat-collecting medium, which is cooled by this process, may be re-circulated in order to maximise the energy efficiency of the system.

The receiver surface on this type of STPP (i.e. Solar Thermal Power Plant), which is heated by the reflected sun radiation, must be cooled all the time in order to avoid melting, oxidation or evaporation of the construction materials. Preferably, the complexity of such an STPP is reduced by using air as heat collecting medium. In the region in front of the receiver surface, a gaseous mixture, such as air, absorbs parts of the incident solar radiation, thereby reducing the radiation onto the absorber body and thus also the rise of temperature in the absorber body. The heated air along with ambient atmospheric air is sucked through the absorber body and is further heated therein by wall radiation and contact with the wall. In average the concentrated solar power input ranges from 0.5 - 2 MW/m² receiver surface area. Hence, very high temperature stable materials are needed for the construction of the receiver surface and its support.

As to the technology of solar air receivers, reference is made to US patent No. 5,483,950, which discloses the original Sulzer concept and the possible receiver materials as "modules of wire mesh strips, etc". This type of material is based on alloyed steel and other high temperature metals. Also the basic return air system is described as a pipe or tubular system. Furthermore, the return air system depends on a deflector for directing the return air back to the receiver front. Said "return air pipes serve as holding elements for the absorber modules" and thus no other carrier technology or frame structure of the absorber modules is described and/or claimed. In Claim 1 the housing mentioned therein has a "heated air chamber", which, as defined, heats the air to be cooled later. In other words the heated air seems not to be heated by the receiver surface, but in the air chamber or by the hot backside of the absorber or by passing through the absorber. In practise the PHOEBUS receiver principle of using deflectors for the return air system could not be used due to melting because it is not possible to cool the deflectors.

Several research projects funded by the EU Commission have reached a practical maximum outlet temperature of 750°C based on the Steinmüller / TSA type of metallic wire mesh strip volumetric receiver. All approximate 100 pieces 240 mm and 40 mm thick hexagonal units are mounted close together with no groves or the like in between for return air. Steady state thermal efficiency at maximum 700°C exceeded 90% at 300 kW/m² insolation on the 2.5 MW large PHOEBUS receiver tested in Spain from 1996 - 2000. In practice the solar flux density must newer exceed <700 kW/m² for more than a few seconds, which was not possible with the slow moving heliostats. The PHOEBUS modules were damaged after a few hundred hours of use. The real problem was that the low thermal mass of the wire meshes makes this technology rather vulnerable. The problem is also linked to the complete lack of possibility for regulating the flow individually over the surface, in any of the 100 piece modules. This one-piece, no-valve regulation receiver surface construction had no control of air mass flow with respect to individual areas and hence no cooling of the wire screen material in critical areas according to the insolation. The maximum efficiency of the 2.5 meter in diameter one-piece absorber was as high as 89%, but the return air efficiency was as low as 1-2% as return air was introduced only from the circumference. In this set-up with no individual regulated flow it is not possible to reach the efficiency potentials of the wire mesh absorber modules. Increasing the plant size makes this phenomenon much more severe and lowers the efficiency further.

For comparison, in the SolAir200 project the 36 piece ceramic SiSiC absorber modules being 125 x 125 mm in size can operate at much higher solar fluxes (absolute values) and at high-flux transients, because the modules are based on a high thermal mass tolerating more than 10 seconds overheating without being damaged or harmed. The ceramic modular structure of the receiver surface is expected to allow absolute values of solar flux densities of more than 1.2 MW/m² and flux transients appearing during trips or cloud fronts with shorter sunshine periods than 1 minute. This leads to output temperature increases from 750°C to 850°C without any damage to the VR-units. For protection purposes such conditions lead to emergency shutdown situations during testing of the PHOEBUS receiver having a wire mesh construction. The specific characteristics of the ceramic receiver surface guarantee a remarkably larger safety margin of the overload fluxes and temperatures avoiding hot spots on the ceramic receiver surface compared to the metallic wire mesh strip receiver surface. High-flux overloads may usually appear during irregular operation conditions (e.g. malfunction of the heliostat field or the receiver control, particularly at full heliostat field power on the receiver surface on sunny days with insolation above design values). High-flux transients appear usually on days with some clouds passing by at the blue sky during periods with high insolation values in between short cloudy periods and at full heliostat field power on the receiver surface, especially after the cloud's front.

Reference is also made to the technology of unitary solar air receivers disclosed in PCT/DK02/00585 in which a ceramic receiver body and a support member (the latter often named a cup) are joined by gluing the ceramic parts together. This technology is based on materials such as extruded silicon carbide monoliths and cast supporting cups manufactured by different methods and glued together in the green stage and then silicon metal infiltrated in a furnace to zero porosity. However this manufacturing method is advanced, costly and leaves no room for implementation of other materials. Furthermore, there is a practical maximum size of such unitary ceramic modules of approximate 180 x 180 mm. Also the supporting structure at the solar power plant tower top has to be supplied with carrying tubes for each VR-unit. This requires use of more materials and more work increasing the total plant cost. The product has thermal conversion efficiencies of 80 - 85%, which is appropriate for central mounted VR-units, but may be too expensive for circumference mounted VR-units where the solar radiation is lower and higher efficiency is needed.

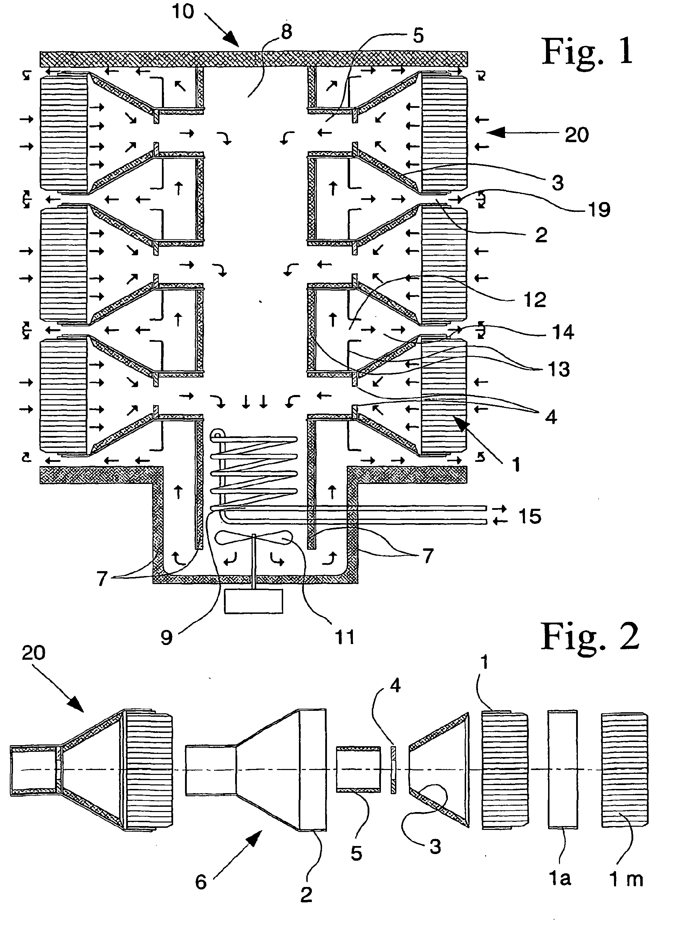

Reference is also made to US patent No. 6,003,508, which in more details discloses a solar volumetric receiver. Fig. 1 of the patent illustrates a solar receiver surface as a plurality of absorber bodies having hexagonal (upper) end surfaces, which are made of a porous ceramic material, e.g. silicon carbide. The absorber bodies are mounted on top of respective support members, each support member being further carried by a metal tube attached to a so called "double membrane". Fig. 2 of the patent shows absorber bodies that are fixed in the support members by bonding or press fitting. The absorber bodies and the support members comprise the same ceramic material, e.g. silicon carbide or silicon silicon carbide, so that both parts are allowed to expand in a uniform manner and their mutual attachment is maintained also in case of high thermal stresses. There is no specific definition or explanation of the terms "bonding" and "press fitting" nor is there any examples of manufacturing the combined absorber and support member assembly in the patent.

During the HitRec research project in the years 1996 - 1999 (being the basis for US patent No. 6,003,508) the 120 mm hexagonal ReSiC absorber modules were connected and locked to the ceramic cups by three alumina ceramic pins of 3 mm in diameter and 20 mm long. However, the pins were difficult to keep secured in place during operation at high temperatures and also brought about complications because the pins by gravity constantly slided out of the corresponding holes in the VR-unit. Furthermore, the assembling was complex due to the many small smooth surface pins and absolutely not to be relied upon as a safe locking arrangement.

The SiRec project tested by Ciemat in the year 2002 demonstrated that a small but full size wire mesh screen as Volumetric Absorber would work with diameters of one meter or more. However, this concept was very vulnerable to local overheating and had poor thermal capacity. After a few hours the front screen layer was melted in several areas. The problem is linked to the complete lack of possibility for regulating the flow over the surface, a no-valve regulation situation. The one-piece construction gave no possibility for control of air mass flow with respect to individual areas and hence no cooling of the wire screen material in critical areas according to the insolation. Also the flat design, which did not ensure the screen layers to be in close contact with each other in order to dissipate heat better, was a serious problem.

However, based on a modulus and dome shaped design according to the present invention with individual cooling and with a suitable return air system it has now been discovered that the efficiency could nevertheless be as high as 90% along with the needed lifetime.

| Absorber monoliths | Thermal efficiency % | Peak insolation kW/m² | Average insolation kW/m² |
|---|---|---|---|
| SiSiC 90 cpsi | 80 - 85 | 1000 | 500 |
| Wire mesh | 80 - 95 | <700 | 300 |
| Wire screen | 85 - 90 | <700 | 300 |
| Metal foil 400 cpsi | 85 - 95 | <800 | 300 |

It has further been shown that the thermal efficiency may be increased by coating the front side of the absorber monolith with a black heat resistant inorganic surface coating, such as paint, a glaze or a metallization.

### Summary of the Invention

The object of the present invention is to provide a much more simplified construction allowing free choice as to variety and lower cost Volumetric Receiver unit (VR-units) and/or absorber modules.

This object is achieved with a volumetric receiver assembly or unit for use in a solar thermal power plant according to claim 1. Certain aspects of the volumetric receiver assembly or unit include a receiver surface heated by radiation from the sun,
- a volumetric absorber module assembled from a monolith within a frame having an Inlet and an outlet and a fluid permeable interior there between for passing an energy-carrying fluid medium such as a gas, e.g. air, through it, attached to
- a support member integrated with a funnel having an inlet and an outlet and a fluid permeable interior there between for collecting the energy-carrying fluid medium leaving the outlet of the receiver module and passing it further on to a double membrane support structure of a receiver housing , joined together with
- a mechanical locking arrangement for attaching the volumetric absorber module to the support member
said absorber module being assembled with said support member in such a manner and by such means that any mutual substantial mechanical and/or thermal stresses there between are avoided or eliminated, even when the volumetric absorber module or assembly is heated to the operational temperature of the power plant.

The air, being pumped through the receiver, is heated at the receiver front face, and not by an air chamber or by the backside of an absorber. The absorber module is an individual body not integrated rigidly into the combined funnel and support member, but mechanical connected with a series of interlocking contraptions to the support member. The invention allows for selection of different absorber module materials from the centre to the circumference or boundaries of the receiver surface. As the concentrated solar radiation is not uniform over the total receiver surface, absorber modules having different material properties are highly advantageous. Preferably, absorber modules manufacture from SiSiC are mounted centrally, whereas circumference absorber modules preferably are based on metals. The use of a series of locks for assembling the absorber modules onto said support members eliminates mechanical or thermal stresses both during the joining process and during the subsequent use in a solar thermal power plants at temperatures of about 700-1000°C. This feature ensures a volumetric solar receiver having a lower plant investment cost, longer service life and simplified maintenance.

Basically two different types of materials and three different design principles are now available for the same STPP. Metallic and ceramic materials broth appear as multi cell honeycomb bodies and as foam structures. Metals further appear as fibrous or wire/thread-alike structures. Designs and materials may according to the present invention be selected without any limitations as to:
- the general modular design of the VR-unit
- the individual absorber monolith and frame design
- the absorber module to support member/funnel locking methods

The absorber or receiver honeycomb bodies may be fabricated from extruded, cast, corrugated material or printed ceramic materials such as re-crystallised silicon carbide (ReSiC) or preferably made of the more advanced silicon silicon carbide (SiSiC). Typically, the monolith would be made from ReSiC with a density of more than 2.1 x 10³ kg/m³ (2.10g/cc), preferably 2.2 x 10³ - 2.4 x 10³ kg/m³ (2.20-2.40g/cc) and a porosity of less than 35 vol.%. The oxidation resistance at elevated temperatures for this family type of ceramics can be significantly improved compared to TeSiC, when pre-formed high density SiC bodies are infiltrated with silicon metal (SiSiC) in a furnace under suitable conditions. The final density of SiSiC should be higher than 2.9 x 10³ kg/m³ (2.90g/cc), especially in the range of 2.9 x 10³ - 3.1 x 10³ kg/m (2.90-3.10g/cc) for maximum service life.

Alternatively the absorber or receiver honeycomb bodies may be fabricated from ceramic foam or in combination with laminated thin sheet pieces of foam mounted on front of a ceramic honeycomb monolith / foam monolith. Ceramic cell foam structures such like ReSiC, SiSiC, SiN is commercial available on the market in various dimensions and from a variety of sources - also as thin foam plates 5-10mm thickness.

The porous foils / paper/ cloth / fabric being from 0.1 to several millimetres in thickness and based on 5-50µm thick carbon fibres or carbon containing fibres to be assembled into a monolith are manufactured among others by Crane Inc. in the USA and by SGL Carbon AG based on commercial available bulk fibres. There are three principal precursor materials for manufacturing carbon fibres, of which polyacrylonitrile (PAN) and rayon are the most common used and available from BASF AG, Hercules Inc., Amoco Inc. and others, with a density around 1.8 x 10³ kg/m³ (1.8g/cm³). Papers or felt may during corrugating and otherwise shaping be mechanically locked and kept dimension stable in desired shape in the green stage by resins, thermoplastic binder systems or phenolic based systems also known for high carbon content. The pre-formed high density corrugated bodies are infiltrated with silicon metal (SiSiC) in a furnace under suitable conditions. The final density of SiSiC should be higher than 2.9 x 10³ kg/m³ (2.90g/cc), especially in the range of 2.9 x 10³ - 3.1 x 10³ kg/m³ (2.90-3-10g/cc) for maximum service life.

Reference is made to the production method developed by SGL Carbon AG for the ceramic brake discs based on carbon fibres being siliconized for the new Porsche vehicle. Alternatively, SGL Carbon AG also manufactures woven textiles and tapes from carbon fibres of thicknesses starting from 0.1mm.

Alternatively, the absorber modules may be fabricated from thin foil based on high temperature stable metallic materials like Inconel, or similar high-tech alloys, which typically do not contain ferrum. Or Ferrum-based high temperature metals alloyed with aluminium, chromium and stabilised with metals like cerium, Ytrium or other compounds of elements of the main groups II to IV of the periodic system. Such widely known alloys typically called FeCrAlloys are available from metal foil manufactures like Kanthal or Sandvik and also used by companies like Emitec GmbH and Kemira Oy as catalyst carriers for the automotive industry.

Metallic cell foam sheets structures having thickness from less than a few millimetres to 5 millimetres are available from a supplier like Sumitomo Electric Industries Ltd. Japan, made from Fe, Ni, Cr, Al alloy with 100 - 400 µm pore size, >95% porosity under the trade name CelMet.

A felt-like material of metals available from the company Bekaert in Belgium, made from alloys such as FeCrAlloy consisting of ferrum, chromium, aluminium and often small amounts of rare earths metal like Cerium, Yttrium is suitable in the VRU improvement according to the present invention. This Bekaert material is a fibre-like material not originating from single fibres assembled into a sheet, but is produced by a process wherein the fibres are scraped from solid material, cut and compressed into a sheet. Available thicknesses are from less than a millimetre to several millimetres.

Alternatively, wire mesh strips arranged mutually axially will work as the receiver body although at lower temperatures compared to ceramics. This well recognized metallic product is also known as Crimped Knitted Wire Wrap. It is manufactured by knitting a relatively thin metal wire (0.05 - 1.0 mm in diameter) into a fabric or a hose, which is crimped to give a thickness of 1 - 15 mm and a width of 15 - 200 mm, preferably 25 - 60 mm. The UK based company, Catalytic Support Systems Ltd., and some European based manufactures supply this product based on commercially available alloyed wires, typically based on alloys from Inco Ltd. in UK such as Inconel or FeCrAlloy type of materials or alloyed with other compounds of elements of the main groups II to IV of the periodic system. This extremely porous and highly flexible material is compressed during assembling into the frame and does not give any additional expansion during heating. The wire mesh is compacted into a density of 0.05 - 2.0 kg/liter. The bending strength and the Young's and shear moduli of the metal wire give the necessary canning pressure. This material is usually resilient, although the wires can become brittle.

Furthermore, the inventive varieties of absorber modules may also be based on the frame principle comprising a suitable shaped laminated metal screen material based on woven-like fabric of metal wires of alloyed metals arranged closely together, radial in multiple layers to form a stack. One of the present inventive features is that even with low thermal capacity materials a high conversion efficiency extending 90% is possible though this requires smaller sized VR-units with individual cooling flow means of regulation. The fabric type of material is typically used as single layer in screens for separation and/or sewing of particular and powdered materials in the industry. The threads or wires used to form the woven wire cloth or fabric are of an advanced type of alloy such as Inconel series or AISI 300 or 400 series or the like. Often the wire is of a small diameter such as 0.04 - 1.0 mm and a distance between the crossing wires ranging from 0.1 - 5.0 mm, preferably 0.3 - 1 mm. The absorber monolith shape may preferably have a slant or tilted edge on the corners extending 5 - 200 mm above the frame structure and be flat or preferably dome shaped between the slant edges though other shapes may be possible.

The oxidation rate determines the lifetime of each of the individual materials through growth of oxides. Excess oxidation is to be avoided by careful selection of materials and by efficient cooling.

Mechanical joining or assembling of the absorber modules in their frame into the support member structure must be affected by ways that avoid stress or physical expansion transferred to the absorber module. Such stress may cause damage to any of the parts, but in particular the absorber modules, which optionally may be fabricated from the more brittle ceramics. Thus, VR-units according to the invention comprise individual elements, e.g. a ceramic absorber module (monolith and frame) and a support member and a metal supporting structure all assembled by means that eliminate:
- excess temperature gradient transfer between the absorber module sides and the support member wall,
- mechanical stress difference transfer between the absorber module and the support member walls,
- mechanical expansion gradient transfer between the absorber module and the support member wall,
even when the assembly is heated by mirror reflected and concentrated solar radiation. The support members may be integrated so they appear as a network of metal brackets also giving rigidity to the support structure across the return air grooves.

In such cases where the absorber modules are of metal alloys, which beneficially may be connected by welding or the like to the also metallic support member walls, there is less need for avoiding the transfer of stress and temperature differences mentioned above.

Yet a means of mechanical assembling is needed for high temperature applications and incompatible materials. The inventive principle disclosed herein comprises joining the parts together with a locking arrangement, which also allow maximum freedom to replace any modules whenever needed and to select modules of different materials and configuration in the same STPP.

Accordingly, the volumetric air receiver principle or design allows for combination or is free to combine various types of design and choice of materials such as ceramic or metallic absorber modules and metallic support members with a receiver housing structure made from both metals and ceramics on the same Solar Thermal Power Plant.

The assembly according to the present invention for use in a Solar Thermal Power Plant (STPP) having a receiver surface to be heated by radiation from the sun, comprises:
- a volumetric absorber module having an inlet and an outlet and a fluid permeable interior there between for passing an energy-carrying fluid medium such as a liquid or a gas, e.g. air, through it,
- a support member integrated with a funnel having an inlet and an outlet and a fluid permeable interior there between for collecting the energy-carrying fluid medium leaving the outlet of the receiver body and passing it further on,
- a double membrane or manifold for receiving the energy-carrying fluid, integrating the support member and re-circulating return fluid so as to simplify the structure, and
- a receiver housing containing no complicated tubing, no air inlet pipes, and no transverse pipes for the return fluid system,
said absorber module being assembled with said support member in such a manner and by such means that any mutual substantial mechanical and/or thermal stresses there between are avoided or eliminated even when the absorber module is heated to the operational temperature(s) of the power plant.

The two parts (absorber module and support member/funnel) may be assembled into the basic VR-unit by one of different locking arrangements, which - depending on the number of individual locking devices - secure frame grooves to the support member slots, e.g. by locking clips. At a later stage this allows for simple and easy replacement of either parts by removing the locking clips. Alternatively, wire clips fitted into the frame groove secure the absorber module from the inside of the support member.

Alternatively, the integrated locking finger principle in the support member can secure and keep in place the absorber module in its frame groove.

Stress differences can be eliminated by maximising or by minimising, preferably eliminating any heat transfer between the absorber modules and the support member, either by maximum full physical contact securing maximum heat transfer or by very little physical contact securing minimum heat, preferably no heat transfer.

Preferably the absorber module is interlinked to a contraption consisting of a support member and a funnel, the interior form of which has parallel or close to parallel walls in the support member and non-parallel walls in the funnel so at least the lower part of the outlet of the absorber module has an outer form matching the interior of said support member form so as to fit therein on the top of the funnel even when heated to the operational temperature(s) of the power plant.

The support member integrated with the funnel may preferably be manufactured from metals originating from sheet, alternatively cast into the desired shape from liquid metal or pressed from powder based metal by high pressure into a form followed by heat treatment. Hydro forming the contraption from tube sheet material may also be preferred. The support member could alternatively be fabricated from ceramics having suitable specifications, such as high mechanical strength and shock resistance. If such ceramic support member offers low thermal conductivity the heat loss from the hot air inside the support member may be lower compared to metals and loose less energy through the support member and hereby improve the total system efficiency.

Local overheating of the front side of the receiver body is likely to happen due to non laminar flow inside the funnel caused by the relatively small outlet area. Laminar airflow through the many channels through the receiver body is not possible when the absorber module is mounted on a support member on top of a funnel having non parallel sides or when the air outlet is of smaller area compared to the absorber module. Changing the channel length in specific areas and lieving others non modified in the monolith can ensure resonably even gas flow in each channel and hereby improve uniform cooling all over the absorber module. Shaping the back-side of the absorber module for even gas flow was developed under the EU sponsored research SolAir project by the present inventor with the company HelioTech, Denmark, in the year 2000 (doc.ref. ht-pyramid-00). Gas flow measured on a non modified monolith having parallel frontal face and outlet face may vary from 8-10 m/s in the centre to 2 - 3 m/s in the corners of a square 125 x 125 mm multi-cell 55 mm high monolith when mounted on a funnel. Also a 250 x 250 mm module was tested and shaped as trial. Typically the airflow in a multi cell honeycomb with 90 cpsi (cells per square inch) is 1-2 m/s. It is then preferred that the outlet side of the absorber module is machined into a shape like a cone or pyramid or combinations thereof, preferably being in the range of the minimum inner diagonal (width) of the support member / funnel outlet with flat areas in the corners to the maximum diagonal measure of the monolith.

Furthermore, the frontal face of the absorber module monolith has preferably a slant or a tilted angel on each inlet side modifying the otherwise sharp edges. The slant design re-directs the return air having a gas speed ranging from 2-10 m/s in the slots between the VR-units. The slant edge design was originally invented under the EU sponsored research SolAir project by the present inventor in order to enhance the return air efficiency and correspondingly the VR-units' thermal conversion efficiency to be improved by 30 - 40% as calculated in the confidential SolAir work (doc. ref. TE-1.7-2RA-03) by Ciemat's (The Spanish Department of Science & Technology) with the FLUENT code CFD (Computerised Fluid Dynamics) program in the month of May, 2000. Reference is further made to the illustrations in PCT/DK02/00584 and PCT/DK02/00585. The slant design is not described or mentioned in the reference US patent No. 6,003,508.

The slant design allows improved cooling of return airflow entering the absorber monolith front comprising monolith edges, wherein the length of the channels continuously decreases towards the edges or areas of the monolith wherein the cross section of the channels increases in steps or continuously towards the edges or a slant with continuously shorter channels in the form of a mantle of rotational pyramid shape. For the SolAir3000 demonstration setup, including 270 piece VR-units each being 140 x 140 mm manufactured from 90 cpsi multi cell SiSiC material, the return air temperature is in the range from 50 - 150°C, preferably 75 - 100°C entering the slant areas giving good efficiency ranging from 84 - 86% combined with very high overload tolerance. Total mass flow being approximate 4 kg/sec and an average pressure drop over the complete receiver surface ranging from 500 - 900 Pa. The above design with many small VR-units allowing the air return to be delivered in between the many VR-units will give air return efficiencies ranging from 45 - 75% corresponding to 7 - 10% total system efficiency increase compared to the PHOEBUS receiver and the SiRec's one-piece constructions both with air return efficiencies of only 1 - 3%.

For further improved airflow an extra body, such as a flow mixer element, may be mounted inside the funnel. Alternatively a diffuser fabricated from sheet metal and of appropriate design will improve for a laminar flow through all channels in the absorber module monolith and hereby avoiding local overheating of the absorber module material. By proper design this device can also act as thermal overload protection in case the absorber module monolith becomes damaged and allows concentrated solar radiation to arrive unrestricted inside the funnel or even inside the double membrane and by this arrangement ensure higher safety margin on the overall system.

For a small power plant having a 10 MWₑₗ (MW electrical) output the solar receiver must be mounted on top of a ∼80 meter high tower and have around 100 - 150 m² surface area. The solar power is concentrated from the field by more than 800 heliostat mirrors each being approximate 100 m² large. The incoming -1000 watt/m² from the sun impinges the heliostat mirrors and is reflected to the receiver surface. Unfortunately it is not possible to distribute the thus concentrated solar energy evenly over the receiver surface. The receiver surface insolation will range from -200 kW/m² in the circumference to ∼900 kW/m² in the middle. In order to compensate for the highly different flux per unit area different methods are used alone or in combination to achieve a uniform and equalized outlet temperature from each of the 4,000 - 7,000 VR-units being approximate 140 x 140 mm. Thus:
1. Different absorber modules corresponding to different price and performance ratios may preferably be mounted individually corresponding to the flux levels, which is the present inventions primary object. More expensive and higher flux level tolerant VR-units in the centre of the receiver surface. And less costly, lower temperature tolerant and potential higher efficiency VR-units towards the receiver circumference with lower flux level.
2. Preferably, the individual airflow should also be regulated by a flow regulating temperature sensitive element based on a spring axially mounted in the hot air gas stream after or close to the funnel outlet, said spring having a central mounted rod connected to a valve member. The spring may be of a helix type placed after the valve head and mounted in each VR-unit. The temperature difference ensures an action or mechanical movement of a body regulation of the airflow in a wave-like motion and hereby equalizes the potential temperature differences.
3. Alternatively, the individual airflow may also be regulated by a flow self-regulating temperature sensitive element(s) based on laminated materials of different expansion ratios mounted in connection with each VR-unit. These temperature differences ensure an action or mechanical movement and regulation of the mass flow in a wave-like motion and hereby equalizes the potential temperature differences. Reference is made to DE Patent No. 197 36 335.
4. Low cost manually mounted fixed diameter orifices at each of the funnel outlet to regulate the air mass flow through the specific individual VR-unit may be an alternative to the more costly ones mentioned above.

Further variations and improvements of the present inventions are a combination of the support member and funnel mounted mechanically directly onto the double membrane or manifold structure. Such supporting structure may physically carry all the absorber modules throughout the support members and funnels. In the simplified version the funnel outlet is attached, welded, anchored or bolted directly to the double membrane acting as manifold for both the hot air medium and the cooling medium. The cooling return air system being part of the whole structure is hereby further simplified, which results in an additional system cost reduction. Neither any return-air deflecting member is needed for the return air to be guided back to the receiver front face as claimed in US 5,483,950.

The principle of a support member and funnel integrated or rigidly fixed onto the double membrane manifold will also allow the mixing of different absorber module sizes and materials on the same Solar Thermal Power Plant (STPP) thus allowing maximum freedom of design, because the absorber modules become real modules and hereby being fully interchangeable. The STPP may even after its operational start be further optimised by changing the absorber modules according to evaluation and hence optionally reduce the number of the costly heliostats.

VR-units based on the expensive SiSiC material have a capital investment share of 2 - 3% of the total STPP plant investment. The investment share of the heliostat field is typically in the range of 35 - 45%. The incredible high number of heliostats in the field is one of the driving forces behind the present invention, because for each percent thermal efficiency increase of the VR-units (in the span from 80 - 95%) and the receiver housing, the investor can reduce the size of the heliostat field with 1%. The heliostat costs are typically in the range 100-150 /m² area installed.

In the present description and claims definitions of individual parts used are as follows:
- Absorber module (preferably integrated) = absorber monolith + frame
- integrated overall support members (IOSM) = support member integrated with a funnel
- VR-unit (Volumetric Receiver unit) (preferably assembled with a locking device) = absorber module + IOSM
- Double membrane = manifold channel(s) in the receiver housing (at the tower top) for return air re-circulation distribution.

Preferred embodiments of the absorber module or assembly according to the present invention are illustrated in the figures of the drawing and described below in the examples and the dependent claims in the attached set of claims.

### Brief description of the drawings

Fig. 1 is an explanatory sketch of the elements and bodies of the present invention integrated into an STPP receiver assembly (Solar Thermal Power Plant),
Fig. 2 is an exploded view of a Volumetric Receiver unit (VR-unit)according to the present invention,
Fig. 3 is a perspective view of a section of VR-units according to the invention without absorber modules,
Fig. 4 is a perspective view with a partial cross section of a volumetric receiver unit or assembly according to the invention,
Fig. 5 is a perspective view illustrating inside features of a support member provided with metal fingers and an outlet in the bottom,
Fig. 6 is a perspective side view with a partial cross section of a volumetric receiver unit according to the invention,
Fig. 7 is a perspective side view with a partial cross section of a VR-unit illustrating a clamping arrangement connecting an absorber module mechanically into a support member,
Fig. 8 is a perspective view with a partial cross section of another embodiment of a VR-unit having an absorber module comprising a monolith having thin parallel interior walls assembled inside a thicker wall reinforcement frame,
Fig. 9 is a perspective view of another embodiment of a support member illustrating a portion of the internals of the support member,
Fig. 10 is a view of parts of two volumetric receiver units, one of which is shown in a perspective side elevation whereas the other is shown in cross section, according to the invention,
Fig. 11 is a perspective view of another embodiment of a support member according to the invention illustrating a portion of the internals of the support member,
Fig. 12 is a perspective side view with a partial cross section of a receiver unit having an absorber monolith with a multi-channel structure provided by thin parallel walls or a multi-cell foam structure,
Fig. 13 is a perspective view of a VR-unit module with a partial cross section of the corner illustrating a portion of the monolith and the support member,
Fig. 14 is a perspective view of another embodiment of a VR-unit showing in partial cross section a portion of a solar volumetric absorber monolith of thin parallel, laminated radial orientated layers of screen material placed on top of a coarser wire mesh.

### Detailed description of the drawings

Reference is made to Fig. 1, which is an explanatory sketch of the elements and bodies of the present invention integrated into an STPP (Solar Thermal Power Plant) receiver assembly designated 10.

The solar receiver surface of the STPP is assembled from a high number of VR-units 20. Such VR-units are mounted close to each other with a small distance 19 in between. Each VR-unit is assembled from an absorber module 1 connected to a support member 2 integrated with a funnel 3. The funnel has an outlet 5, preferably connected to a double membrane 13 at the front of the receiver housing. Optionally an orifice 4 or self-regulating element may be mounted at the funnel outlet.

In further details Fig. 1 shows in cross section a portion of such a solar thermal power plant receiver assembly 10 in which receiver absorber modules 1 composed of monoliths 1 m each having a multiplicity of parallel through going channels are mounted in support members 2. The incident solar flux heats each absorber monolith 1, through which ambient air is sucked. During the passage through its multiplicity of channels the ambient air is heated to a high temperature, thus cooling the entire absorber module. The heated air leaving the absorber module, which is connected to the support member 2, 3, is passed further on as hot air through the outlet 5 at the funnel-shaped part of the support member at temperatures of about 700 - 900°C into a central cavity 8. Either a heat protecting shield with an air gap or an insulating layer of fibrous material may reduce heat loss from the inside to the outside of the funnel. The hot air collected in the central cavity 8 from all the many VR units and after passing a tubular heat exchanger 9 producing steam 15 is returned by a motor driven fan 11 back through tubing 7 into the double membrane manifold for re-circulation.

The "cooling air" having a temperature of preferably about 75-150°C is passed in the opposite direction of the hot air, which preferably has a temperature of about 700-900°C, at the inside of the support member, and in practise preferably returned through double membrane 13 holes 12 to the collecting volume 14 between the integrated overall support members (IOSM). The return air on the outside of the absorber module is passed through grooves or clefts 19 between the absorber modules 1 to the upper surface thereof, at which point it is mixed with some ambient air and sucked backwards through the interior of the absorber structures via a multiplicity of parallel channels of short length provided therein at the slant edge areas. The backside or outlet side (not shown) of the absorber monolith is shaped so as to assure equal pressure drop and laminar flow through all the many channels.

Referring to Fig. 2, which is an exploded view of a Volumetric Receiver unit (VR-unit) 20, an absorber module is indicated by 1, said module being composed of a monolith 1 m in a frame 1 a, 2 is the support member for the absorber module 1, 3 is a funnel preferably provided with an internal insulation on its inner wall and preferably integrated into the overall support member 6 (IOSM), 5 is an outlet tube, also preferably provided with an internal insulation on its inner wall, for the outlet of the IOSM 6, to be mechanically connected to the double membrane manifold in the receiver housing, 4 is an orifice or aperture member for regulating the air-flow through the particular VR-unit.

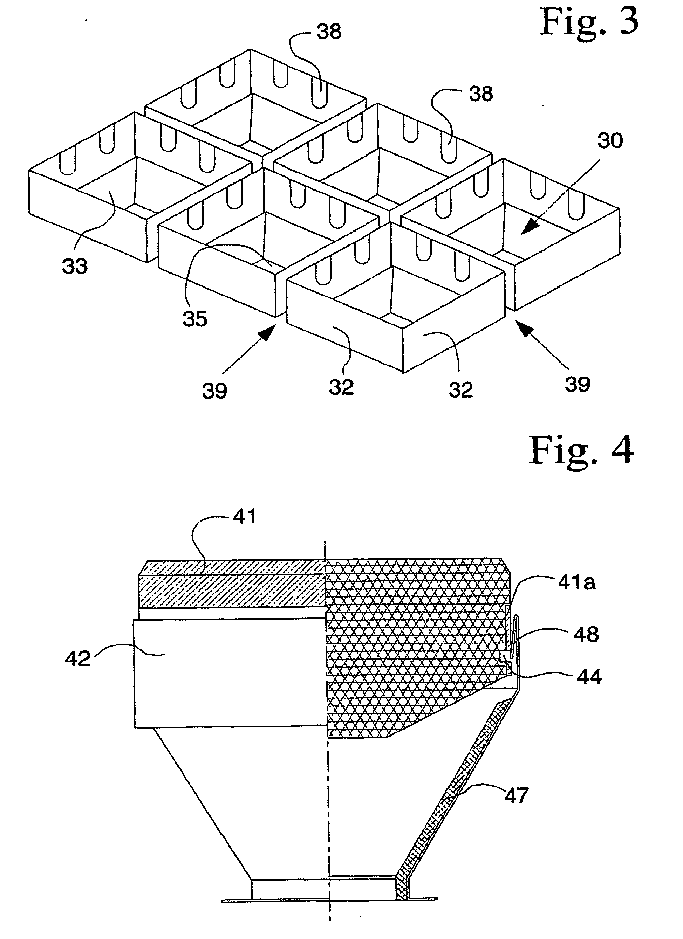

Referring to Fig. 3, which is a perspective view of a section of VR-units according to the invention without absorber modules, 30 indicates a support member inlet being e.g. 140 mm in square, 38 indicates fingers for a locking arrangement on each of the four parallel sides 32 surrounding the support member inlet area, 39 designates grooves or clefts between the support members for return air, 33 indicates the lower part beneath the support member having the shape of a funnel with non parallel sides of which the outlet 35 is connected mechanically to a double membrane manifold arrangement. In between the funnels outlet 35 return air inlet orifices are located (not shown).

Referring to Fig. 4, which is a perspective view with a partial cross section of a volumetric receiver unit or assembly according to the invention comprising a square support member 42 provided with integrated metal fingers 48 of bended material on each side of the frame 41 a of the absorber monolith 41 for clamping purposes. The metal fingers extend into a groove 44 provided in the frame 41 a of the absorber module. In this way no fixed, rigid physical connection is formed between the absorber module and the support member and stresses arising from thermal expansion do not cause parts to crack. Fibre insulation 47 on the inside of the funnel part of the support member reduces the heat loss from hot air inside the funnel to the outside colder return air.

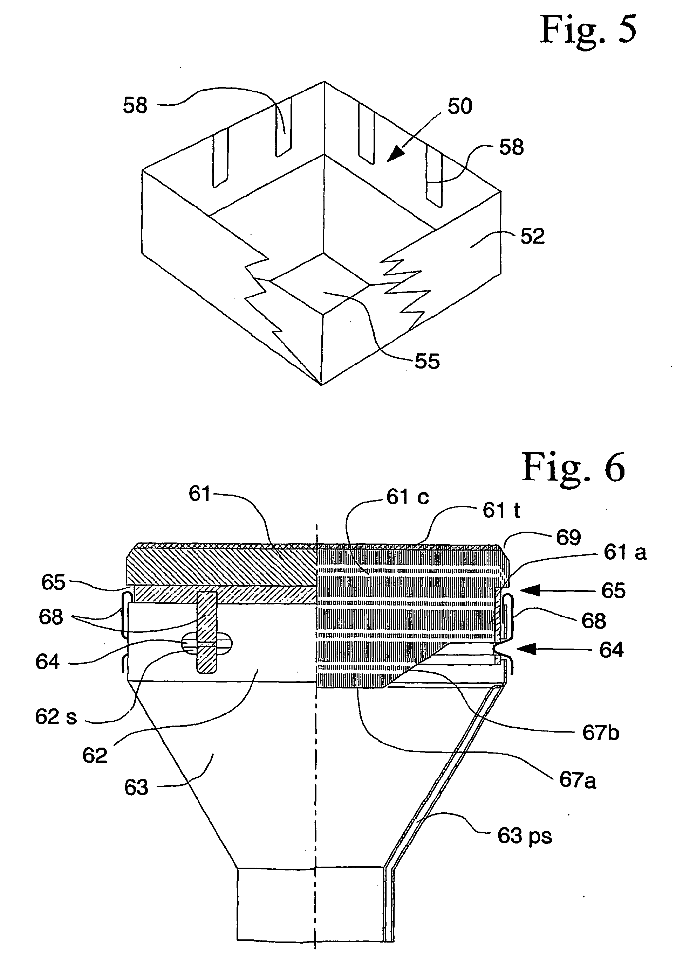

Referring to Fig. 5, which is a perspective view illustrating inside features of a support member 52 provided with metal fingers 58 and having an outlet 55 in the bottom. These metal fingers 58 are part of the support member 52 and point towards the outlet 55 inside the member. The outlet 55 is of a smaller area than the inlet area 50, which has dimensions suitable for receiving and holding an absorber module.

Referring to Fig. 6, which is a perspective side view with a partial cross section of a volumetric receiver unit according to the invention composed of a ceramic absorber monolith 61 and a support member 62 provided with slots 62s in its side walls and further connected to a funnel portion 63. The ceramic absorber module 61 is assembled with the support member 62 along a groove 64 in a recess 65 in all the outer circumference frame walls 61 a of the absorber module. Clips 68 are mounted at the top edge of the wall of the support member 62 and are protected from direct solar radiation by the projecting part of the monolith above the recess 65. Besides, the clips are located in an area of return air and thus also being cooled thereof. The absorber monolith is optionally of a laminated ceramic construction having a thicker and thus stronger honeycomb body 61 c for structural issues laminated to a thinner highly porous multi-cell top layer 61t, which receive the solar radiation and increases the efficiency, all assembled inside a frame 61 a. The outlet side or backside of the absorber monolith is shaped like a frustum of a pyramid having a central flat face 67a and inclined peripheral side faces 67b so as to obtain a desired gas flow through the absorber monolith's many channels, whereas the front side is mostly flat though provided with slants or tilted edges 69 at all side rims.

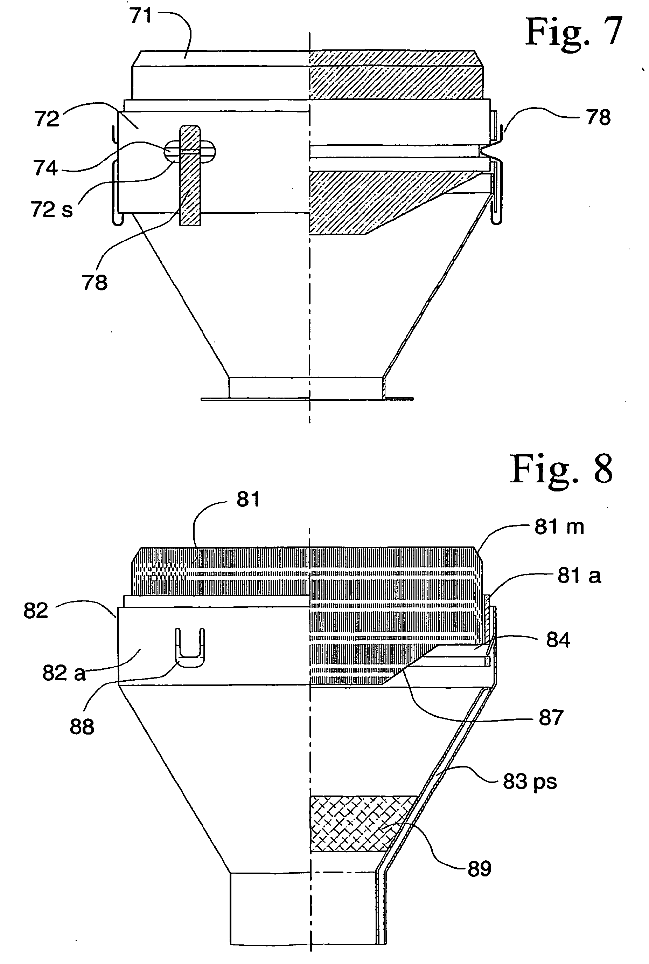

Referring to Fig. 7, which is a perspective side view with a partial cross section of a VR-unit illustrating a clamping arrangement connecting an absorber module 71 mechanically into a support member 72. The inlet parallel sides of the support member are equipped with a number of slots 72s or rectangular openings in the side walls. Positioning the absorber module correctly inside the support member discloses a groove 74 in the absorber module. A clip 78 or locking fixture of suitable metal provides interconnection between the two parts and secure that the absorber module is held in the correct position. If the absorber module, against expectation, is damaged or after its full service life needs replacement the removal of the clips allow for such replacement.

Referring to Fig. 8, which is a perspective view with a partial cross section of another embodiment of a VR-unit having an absorber module comprising a monolith 81 having thin parallel interior walls assembled inside a thicker wall reinforcement frame 81 a. The absorber module is interlocked in a support member 82 by U-shaped fingers 88 cut into the side walls 82a of the support member. A heat protecting shield 83ps comprising an air gap or an insulating layer of fibrous material reduces heat loss from the inside to the outside of the funnel. The "cooling air" at preferably about ∼100°C is passed on the outside of the support member past the fingers 88 towards the upper surface of the absorber modules, at which point it is mixed with ambient air and sucked backwards through the interior of the absorber structures via the multiplicity of parallel channels of short length provided therein at the slant areas 81m. The backside or outlet side 87 of the absorber monolith is shaped so as to assure equal pressure drop and laminar flow through all the many channels. A porous body 89 is mounted close to the funnel outlet as thermal protection in case the monolith becomes damaged and allows direct solar radiation into the interior of the double membrane.

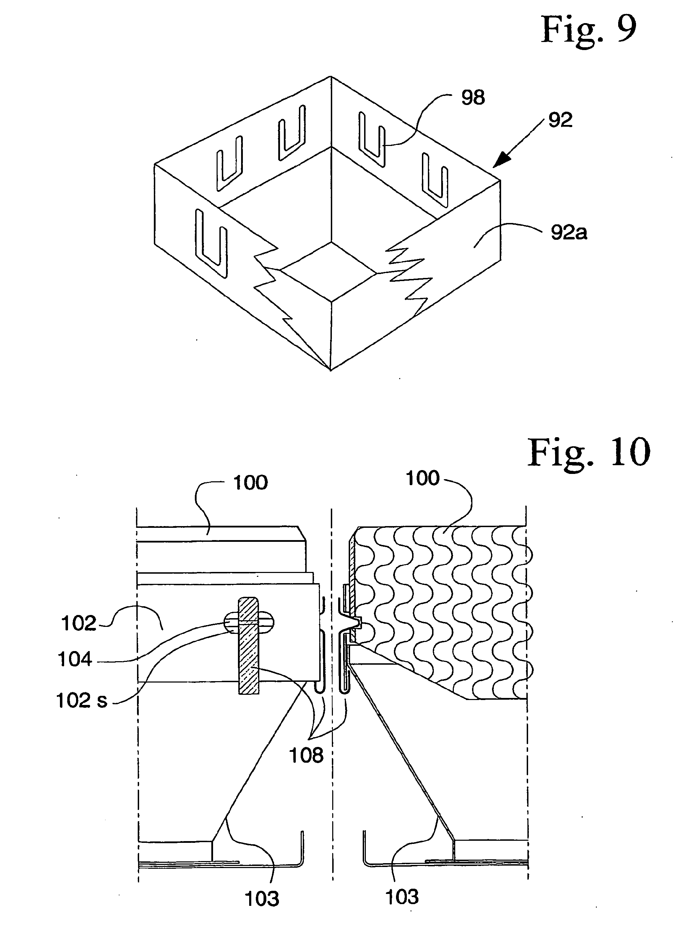

Referring to Fig. 9, which is a perspective view of another embodiment of a support member 92 illustrating a portion of the internals of the support member having fingers 98 originating from the support member side walls 92a and produced by cutting U-shape configurations in the wall and hereby creating the fingers, which by slightly bending act as springs and locking arrangements for securing the absorber module in its frame grooves. Later removal of the absorber module is easily done by bending the securing finger with a tool in the reverse direction.

Referring to Fig. 10, which is a view of parts of two volumetric receiver units, one of which is shown in a perspective side elevation whereas the other is shown in cross section, according to the invention, each being composed of an absorber module and a support member assembled together. 100 designates the absorber module and 102 is the support member assembled together by attached clips 108 on the outside of the circumference wall of the support member. The attached clips are located in a groove or cleft of return air and are thus also being cooled. The absorber module is optionally of a laminated construction comprising a thicker and thus stronger wire mesh layer body for structural issues laminated to a thinner highly porous layer. The outlet side or backside of the absorber monolith is optionally shaped to a non flat face so as to obtain a desired gas flow through the absorber monolith, whereas the front side is mostly flat in between slant peripheral areas. The absorber monoliths are at their top faces and slant areas optionally manufactured from wire mesh.

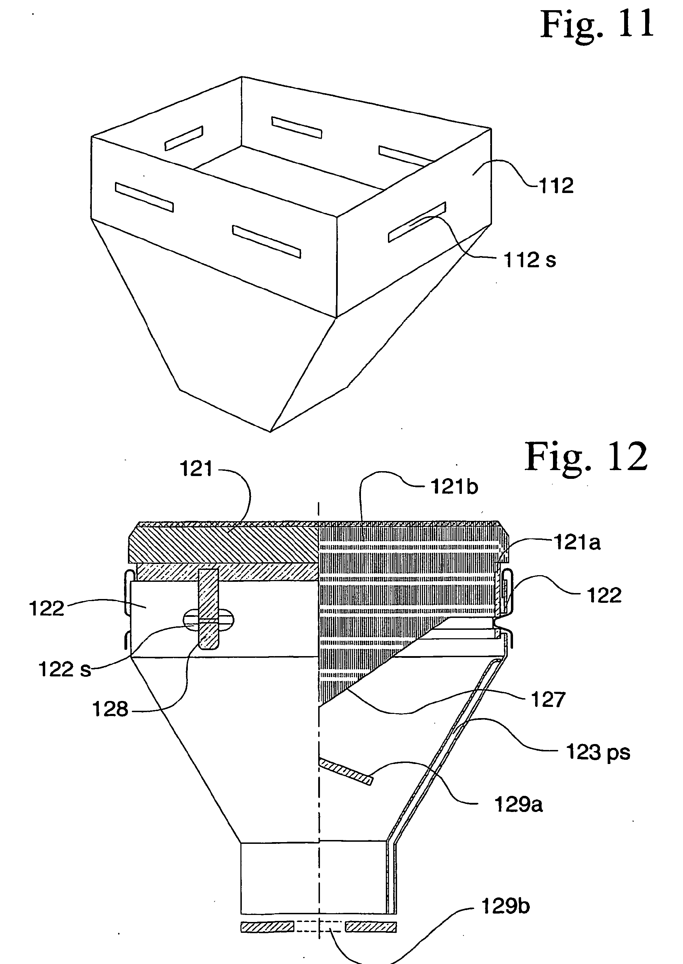

Referring to Fig. 11, which is a perspective view of another embodiment of a support member illustrating a portion of the internals of a support member provided with elongated slots 114 cut in the support member side walls 112, through which the use of attached clips on the frame of the support members act as locking arrangements for securing the absorber module in place within the support member.

Referring to Fig. 12, which is a perspective side view with a partial cross section of a receiver unit having an absorber monolith 121 with a multi-channel structure 121 b provided by thin parallel walls or a multi cell foam structure assembled inside a thicker wall reinforcement frame 121 a. The incident solar flux heats the absorber monolith, through which ambient air is sucked. During the passage through the porous body the ambient air is heated to a considerably high temperature, thus cooling the absorber structure. The heated air leaving the absorber monolith, which by the frame 121 a is connected to a support member 122 provided with through-going slots 122s, is passed further on as hot air through the outlet at the lower funnel-shaped parts of the support member at about 700 - 900°C through the orifice 129b into the manifold. A heat protecting shield 123ps comprising an air gap or an insulating layer of fibrous material reduces heat loss from the inside to the outside. The hot air is collected from all such VR units and after passing a heat exchanger producing steam returned by a motor driven fan (not shown) into the double membrane structure for re-circulation. The "cooling air" at about preferably 75 - 150°C thus produced is passed in the opposite direction of the hot air, preferably being >800°C at the inside of the support member, and in practise returned to the inclined angle/slant areas at the frontal surface of the absorber module. The colder return air on the outside of the support member passes clips 128 attached to the upper edge portion of the support member before it is mixed with the ambient air and sucked backwards through the interior of the absorber structures 121 b via the multiplicity of parallel channels or interconnected pores provided therein. The backside 127 or outlet side of the absorber monolith is shaped so as to assure equal pressure drop and laminar airflow through all the many channels. Before the funnel outlet a thermal protection and combined diffuser body 129a influences the air flow and avoids direct solar radiation into the double membrane if the absorber monolith 121 becomes damaged. At the funnel outlet the orifices 129b regulates the mass flow passing through the individual VR-unit according to the outlet temperature.

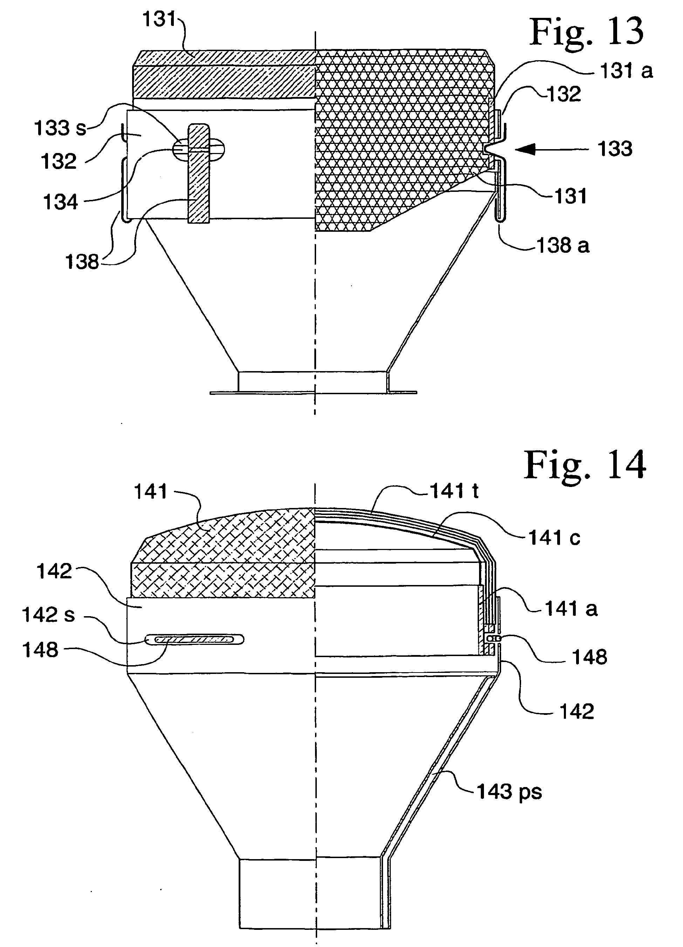

Referring to Fig. 13, which is a perspective view of a VR-unit with a partial cross section of the corner illustrating a portion of the monolith 131 and the support member 132 with slots 132s cut into the support member side walls. Clips 138 manufactured from heat resistant, elastic type alloyed sheet metal secure the absorber module in its frame grooves 134. The clips in this figure are mounted from the rear side 138a of the support member and are hereby easier cooled by the return air and further better protected from solar radiation. Later removal of the absorber module is easily done by bending the clips with a tool in the reverse direction.

Referring to Fig. 14, which is a perspective view of another embodiment of a VR-unit showing in partial cross section a portion of a solar volumetric absorber monolith 141 of thin parallel, laminated radial orientated top layers 141t of screen material placed on top of a coarser wire mesh 141 c optionally welded onto a thicker solid metal wall reinforcement frame 141 a. The laminated radial orientated top layers 141t and the coarser wire mesh 141c are preferably of a convex or dome-shaped form, which make them more impact and pressure resistant. The absorber monolith is via its frame 141 a connected to a support member 142 by clips which may have a different shape and be based on round wire 148 material securing the module radial into slots 142s in the support member 142 at its circumference. The incident solar flux heats the absorber monolith through the dome-shaped front through which ambient air and the return air at the slant edges are primarily sucked. During the passage through the porous screen layers the ambient air is heated to a considerably high temperature, thus cooling the absorber structure. The heated air leaving the absorber structure is passed further on as hot air through the outlet at the lower funnel-shaped part of the support member at about 700 - 900°C into the manifold area. A heat protecting shield 143ps comprising an air gap or an insulating layer of fibrous material reduces heat loss from the inside to the outside of the funnel.

### Description of preferred embodiments

A solar device comprises according to the present invention a receiver housing mounted on a high tower carrying a plurality of sun radiation absorber modules combined with respective supports, hot air manifolds and cooling medium manifolds. The receiver surface with its many absorber modules is heated by concentrated solar radiation from a large number of reflecting mirrors mounted at ground level. Each absorber module has an inlet and an outlet end, between which a flow of gas is guided through the interior of the absorber from its inlet to its outlet end and further on through the support member. The gas or air thus heated is collected for a later stage of use in combination with a device for generating electricity. A return air system guides through internal channels in the receiver housing the pumped and cooled air from the heat exchanger outlet back to the re-circulation manifold, which through outlets in its double membrane structure directs the cooled air to the free space between the outside of the support members and further on into the grooves or slots between each of the absorber modules in the frontal surface plane.

### Example 1

SiSiC, i.e. silicon silicon carbide, provides through the high thermal conductivity and thermal capacity higher thermal shock resistance compared to most other ceramics and with its zero porosity longer service life being 10^{th} of thousands of hours at elevated temperatures and in oxidising environments compared to re-crystallized SiC and most metals. The SiSiC absorber module monolith permits the highest outlet temperature of any material available tolerating constantly more than 900°C and at the same time being less vulnerable to overheating.

A metal sheet support member/funnel is combined with a ceramic volumetric absorber module based on silicon silicon carbide and comprised of:
1. an absorber monolith which is made up of a ceramic honeycomb block having 0.3 - 1 mm wall thickness, outer dimensions of approximate 140 x 140 mm and being 40 mm high, employing triangular, square, pentagonal or hexagonal cell shaped channels or a combination thereof ranging from 50 to 800, preferably 90 - 300 CPSI. The thermal conductivity is preferably higher than 10 Wm²/K/1000°C. The specific surface area for such structure will preferably be in the range of 500 - 3.000 m²/m³, more preferably 1.000 - 2.000 m²/m³, being extruded or integrated with
2. a reinforcement frame wall at the monolith circumference, e.g. 1 - 3 mm thick, said absorber module being supplied with a groove cut into the frame wall circumference, the groove being approximate 5 mm high and approximate 3 mm deep.

The support member has a 140 x 140 mm inside dimension square section formed mechanically from sheet metal and integrated with a funnel having a 75 mm outlet and a total height of 125 mm.

The two parts (absorber module and support member) may preferably be assembled by a locking arrangement optionally depending on the number of individual locking devices securing the frame grooves with the support member slots. At a later stage this allows simple and easy replacement of either parts by removing the locking clips.

### Example 2

A metal sheet support member/funnel combined with a volumetric absorber module based on metal wire mesh.

The absorber module is assembled from individual bodies of different structural design with internal suitable dimensions, such as:
1. a high number of flat knitted metal wire mesh strips arranged axially and close to each other to form a quadratic block monolith having dimensions of approximate 240 x 240 mm and being 60 mm high forming an absorber monolith packed inside
2. a frame formed of a thicker metal strip for reinforcement, e.g. 1 - 5 mm thick, being less vulnerable to overheating, the wire mesh monolith is internally anchored inside the reinforcement frame by vacuum brazing, welding or by through passing nail(s) or rod(s), said frame being on its circumference supplied with a groove making it ready as an absorber module
3. to fit partially into a 250 x 250 mm square section mechanical formed sheet metal support member / funnel having a 75 mm outlet and a height of 150 mm.

The two parts (absorber module and support member) may be assembled by a locking arrangement depending on the number of individual locking devices securing the frame grooves with the support member slots. At a later stage this allows simple and easy replacement of either parts by removing the locking clips.

Alternatively the two individual bodies may be assembled at the support member square sections by connecting edges by brazing or welding with LASER or with TIG or MIG welding techniques at their circumferences so that a gas tight connection is obtained. The reinforcement frame is hereby connected rigidly to the support member edges.

The wire mesh solution being more vulnerable to overheating must be based on alloys of high nickel and / or chromium content such as those from Inco Ltd. in UK known as Inconel type of materials. The flat knitted metal wire mesh strips may be rolled into a circular body being further formed to a quadratic or other preferred shape to fit inside the frame structure. It is of importance to ensure a definite density to ensure laminar gas flow in order to avoid local overheating of the wire mesh.

The highly flexible material is compressed during assembling into the frame and does not give any additional expansion during heating. Density of the compacted extremely porous knitted wire mesh is ranging from 50 - 500 kg/m³, according to the present invention preferably compressed to 100 - 200 kg/m³. Material thermal conductivity is preferably higher than 5 Wm²/K for better durability. Wire mesh of different specification may be assembled into the same frame thus giving optionally different pressure drop across the absorber frontal surface. Specific surface for this structure will preferably be in the range of 200 - 3.000 m²/m³, preferably 500 - 2.000 m²/m³.

The supporting members / funnels may be formed into a square section by hydro forming the sheet or by conventional metal cutting and bending.

### Example 3

A sheet metal support member / funnel combined with an absorber module, which is based on corrugated sheet metal to form a multi cell honeycomb monolith in design principally similar to the honeycombs used in the automobile catalytic converter industry, such as supplied by EmiTech in Germany rearranged into a volumetric receiver (VR-unit) unit design. Commonly the automotive industry supplies converters with a circular shape or dual circular shape inside the reinforcement canister. However, this manufacturing method makes it difficult to form a square-shaped design without partially changing the hydraulic size on the cells. In the present invention the corrugated foil may also be from flat or straight corrugated sheets assembled as parallel metal sheets arranged axially, preferably in a combination of corrugated and non-corrugated sheets arranged so that no corrugated sheet top correspond with a similar corrugated sheet valley.

The absorber module is assembled from individual bodies with suitable mutual dimensions, such as:
1. a quadratic honeycomb monolith having dimensions of approximate 140 x 140 mm being 50 mm high and fabricated from corrugated alloyed metal foil having a thickness less than 1 mm, preferably in the range of 0.01 - 0.9 mm corresponding a possible hydraulic diameter of 0.1 - 3 mm. Preferably the number of cells per square inch (cpsi) ranges from 100 - 1600, preferably 150 - 800 cpsi, (sheet material thermal conductivity is preferably higher than 5 Wm²/K, specific surface for this structure will preferably be in the range of 1.000 - 8.000 m²/m³, preferably 2.000 - 4.000 m²/m³), said monolith has preferably on its circumference
2. a thicker metal strip acting as an reinforcement frame, such as 1 - 3 mm thick and 50 mm high; the frame is supplied with partial grooves on its circumference being approximate 5 mm high and approximate 3 mm deep. The individual sheet metal foil parts of the absorber modules may be anchored to each other and / or the frame by vacuum brazing, by welding or by a through passing nail(s) or rod(s); the assembled absorber module being an individual body is
3. further interlocked into a 140 x 140 mm square section mechanical formed sheet metal support member / funnel having a circular 75 mm diameter outlet and a height of 125 mm.

Other dimensions may be according to the total system design. The materials used may be alloyed from metals such as iron, nickel, chromium and preferably amounts of aluminium and rare earth metal(s) or the like. The two parts (absorber module and support member) may be assembled by a locking arrangement depending on the number of individual locking devices securing the frame grooves with the support member slots. At a later stage this allows simple and easy replacement of either parts by removing the locking clips.

The thickness of the corrugated sheets is designed so it is the least vulnerable to overheating and has the highest heat capacity. The sheets could be made from sheets stamped and stacked axially together inside the square metal plate reinforcement frame secured and locked in a simple mechanically way so they if needed are replaceable.

Alternatively the two individual parts may be assembled at the support member square sections connecting points by brazing or welding with LASER or with TIG or MIG welding techniques at their circumferences so that a potentially gas tight unit is obtained. The reinforcement strip is hereby welded to the funnel inlet edges.

### Example 4

Ceramic foam absorber module manufactured from ceramics like SiSiC or SiN provides through the high thermal conductivity god thermal shock resistance and due to its low wall porosity a long lifetime at elevated temperatures and in oxidising environments compared to re-crystallized SiC and most metals. The SiSiC absorber module permits the highest outlet temperature of any materials available tolerating constantly as high as 900°C and at the same time being less vulnerable to overheating.

A support member / funnel is combined with an absorber module based on a ceramic foam monolith having:
1. an SiSiC quadratic ceramic foam monolith with outer the dimensions of approximate 140 x 140 mm, being 40 mm high, the monolith may preferably employ PPI (pores per inch) ranging from 10 - 200, preferably 20 - 80 PPI and be integrated, cast in the green stage
2. with a dense and 40 mm high and thick reinforcement wall on its circumference, e.g. 1 - 3 mm thick, acting as a frame, the frame being equipped with a set of grooves on the circumference being approximate 3 mm wide and approximate 4 mm deep.

This absorber module is on the STPP tower top connected mechanically to a square section mechanical formed metal support member / funnel having a circular 75 mm diameter outlet and a height of 125 mm. The two basic parts are assembled by a locking arrangement depending on the individual devices securing the frame grooves with the support member slots, which at a later stage allow simple and easy replacement of either parts by removing the locking clips.

The frame around the foam monolith may originate from a fabric, paper or the like with a thickness of 1-5 mm connected to the foam before filled with a ceramic slurry ,thus being integrated and of different density during drying and subsequent firing.

For further thermal conversion efficiency the foam body may be laminated radial from foam sheets of different PPI structure. The foam closest to the sun has smaller pores and higher PPI number, like 50 - 200 PPI whereas the more distant mechanically supporting foam has larger pores and respectively lower PPI number. Preferably the absorber monolith is flat in the front with slant edges on its circumference for improved returned air reintroduction into the monolith.

### Example 5

A great number of sheet metal support members / funnels are integrated rigidly onto a receiver housing's double membrane / manifold combined with a similar number of volumetric absorber modules based on silicon metal infiltrated silicon carbide monoliths.

In this design the ceramic SiSiC absorber module is replaceable as an individual body having dimensions suitable to the support member, such as:
1. a monolith with approximate outside dimensions of 150 x 150 mm and being 40 mm high, said monolith may employ square, triangular, pentagonal or hexagonal cell shapes or combination thereof with cpsi ranging from 50 - 800, preferably 90 - 300 cpsi. (Thermal conductivity is preferably higher than 10 Wm²/K/1000°C and the specific surface for this structure will preferably be in the range of 500 - 5,000 m²/m³, preferably 1,000 - 2,000 m²/m³) extruded and integrated on the circumference with
2. a reinforcement wall, such as a 1 - 3 mm thick frame acting structure (preferably located in the recess area like reference 65 in figure 6) where a number of approximate 5 mm deep and 5 mm high grooves are cut radial into the circumference or alternatively one full cut groove.

The support member is an outside 140 x 140 mm square section mechanical formed sheet metal member integrated with the funnel having an outlet height of approximate 125 mm and being attached mechanically or by welding directly to the receiver housing's double membrane. The support member has a number of grooves corresponding to the grooves on the absorber module frame.

The two parts (absorber module and support member) are preferably assembled by a locking arrangement depending on the number of individual locking devices securing the frame grooves with the support member slots, which at a later stage allow simple and easy replacement of at least the absorber module by removing the locking clip(s).

For further efficiency the multi cell monolithic body may on its front be laminated to a foam layer of high PPI structure. The foam layer may be from 0.2 - 20 mm thick, preferably from 1-10 mm thick. The foam layer is preferably integrated together with the absorber module in the green stage and subsequently silicon metal infiltrated in a furnace to form solid SiSiC. Preferably the absorber monolith is flat at the front with slant edges on its circumference for improved return air reintroduction into the monolith.

### Example 6

A support member combined with a volumetric absorber module based on corrugated walls from silicon silicon carbide.

A corrugated carbon fibre fabric / paper or woven cloth alike structure is formed into sheets, which are assembled into blocks and then carbonised or pyrolized and by subsequent siliconizing transformed into full density SiSiC. The sheets may be based on randomly orientated carbon or carbon containing fibres having thickness of 0.01 - 2 mm, preferably 0.1 - 0.8 mm, which in the green stage is secured by a suitable organic binder system. The internal sheet surface or porosity may preferably further be filled with a carbon containing compound. The flat sheet may be corrugated and in this corrugated stage glued onto a separate flat sheet, which secure the hydraulic shape of the corrugated sheet. This combined structure may be rolled in a continuous process to form an absorber monolithic honeycomb alike body. This rolling manufacturing method, however, makes it difficult to form the body into a square shaped design without partially distorting the hydraulic size of some of the cells. This can be overcome through at least two methods: one being assembling of more than one rolled body in the frame; the other be by stacking the foils in a parallel manner. So in the present invention the corrugated sheets or foils may be from flat or straight corrugated sheets assembled as parallel-arranged sheets, preferably in a combination of corrugated and non-corrugated sheets arranged so that no corrugated sheet top corresponds with a similar corrugated sheet valley. Cut into sheets of suitable size and stacked as blocks into cassettes of thicker sheets as reinforcement on the circumference, all parts are assembled with organic glue. After assembling into cassettes the body is heated in a suitable environment in a furnace to temperatures high enough to secure silicon metal infiltration to zero porosity. If higher carbon content is needed for this process the green body may be further dipped into or coated with a slurry containing free carbon or graphite and if advantageous also silicon metal powder or SiC powders. The foil, paper wall porosity will preferably be ranging between 5 - 25% and have pore sizes below 10 µm for optimum silicon metal infiltration.

The absorber module is based on two individual bodies with suitable internal mutual dimensions, such as:
1. a quadratic honeycomb monolith having approximate dimensions of 136 x 136 mm and being 50 mm high made from corrugated fabric or papers having a thickness less than 2 mm, preferably in the range of 0.1 - 1 mm, after being corrugated to a hydraulic diameter of 0.1 - 20 mm, preferably in the range of 0.5 - 4 mm hydraulic diameter (corresponding a number of cells per square inch (cpsi) ranging from 50 - 800, preferably 100 - 400 cpsi) honeycomb monolith, which on its circumference has
2. a thicker fabric or paper strip attached for reinforcement, e.g. 1 - 5 mm thick and 50 mm high, acting as a frame in which circumference a full or a number of smaller groves are cut, acting together with the locking clip(s).

The absorber module is in the final step preferably converted in a furnace to a silicon silicon carbide body with zero porosity in the walls. Then it is connected with a 140 x 140 mm square section sheet metal support member having a circular 75 mm diameter outlet and a height of 125 mm.

The two parts (absorber module and support member) may be assembled into a VR-unit by a locking arrangement depending on individual locking device(s) securing the frame grooves inline with the support member slot(s). At a later stage this allows simple and easy replacement of either parts by removing the locking clip(s).

Other dimensions may be preferred according to the total system design. Thus, the present invention offers a very important feature, wiz. that the specific corrugated foil method easily allows production of very large ceramic modules. Sizes like 200 x 200 mm or even 1000 x 1000 mm modules are possible in quadratic, rectangular or other shapes. Sizes, which it is impossible to manufacture by extrusion and subsequent firing of honeycomb ceramics.

Preferably, the corrugated carbon based material is converted into silicon silicon carbide advantageous with its high thermal conductivity, preferably higher than 10 Wm²/K/1000°C. Specific surface for this multi-cell structure will preferably be in the range of 1,000 - 5,000 m²/m³, preferably 2,000 - 3,000 m²/m³.

The thickness of the corrugated sheets or papers is so as to be designed to the least vulnerable to overheating and having the highest heat capacity allowing a maximum of cpsi. The sheets could alternatively be made from plain sheets and corrugated sheets stacked alternating together inside a square sheet metal plate reinforcement frame, secured and locked in a simple mechanically way so if required is replaceable.

For optimization of pressure drop across the monolith corrugated assemblies of different hydraulic diameter may be arranged into the same frame or frame bodies with identical hydraulic diameter may be arranged along other frame bodies with a different hydraulic diameter in the same Solar Thermal Power Plant.

With reference to the above example the absorber module may also be used in other combinations like assembled together with a ceramic support member in the green stage and further siliconised in a furnace to form a unitary VR-unit.

### Example 7

A sheet metal support member / funnel combined with an absorber module, which is based on a number of laminated metal wire screens, forms a highly efficient VR-unit.

The absorber module is assembled from principally two individual bodies of different structural design with internal suitable dimensions, such as:
1. a high number, e.g. 1 - 30, preferably 5 - 15, of laminated metal wire screens arranged radial to form a quadratic block monolith with slant edges and a vaulted top having outer dimensions of approximate 138 x 138 mm and being 40 mm high forming an absorber monolith stack further packed inside
2. a frame at its circumference, being of a reinforcement metal strip, such as 1 - 4 mm thick, being less vulnerable to overheating, the laminated metal wire screens are anchored to the reinforcement frame by vacuum brazing, welding or by through passing nail(s) or rod(s), said frame is on its circumference supplied with a groove and is hereafter ready as an absorber module to fit into a 140 x 140 mm square section mechanical formed sheet metal support member / funnel having a 75 mm outlet and a height of 125 mm.

The supporting member / funnel may be formed into a square section by hydro forming the sheet or by conventional metal cutting and bending. Other dimensions and shapes are easily manufactured in accordance with the above example, such as 250 x 250 mm or even larger with funnel outlet designed to provide stiffness and desired pressure drop and mass flow. Increasing the dimensions of the absorber modules has the benefit that the internal pressure drop inside the double membrane will decrease and manufacturing be simplified.

The primary receiver surface between the slant edges are possibly flat or preferably vaulted in order to avoid the screens to become separated. Vaulting may be concave or convex. The thermal mass of the laminated screens are relatively low and in order to reduce potential overheating it is of importance that the screens touch each other perfectly at any time during use. Vaulting the energy transforming screens by stretching them on top of a support screen made of larger mesh width and of considerably thicker thread can further thermally protect the structure. This support screen adding stiffness to the overall module may potentially be anchored directly to the frame structure.

The two parts (absorber module and support member) may be assembled by a locking arrangement depending on one thread locking devices or a number of individual locking devices securing the frame grooves to the support member slots. At a later stage this allows simple and easy replacement of either parts by removing the locking clips.

Alternatively the two individual bodies may be assembled at the support member's square sections connecting edges by brazing or welding with LASER or with TIG or MIG welding techniques at their circumferences so that a gas tight connection is obtained. The reinforcement frame is hereby connected rigidly to the support member edges.

The above procedures and examples may be altered according to usual practice by the person skilled in the art without extending beyond the scope of the invention, e.g. by combining wire mesh and corrugated foil structures in the same absorber module or foam sheets and corrugated foil structures in the same absorber module.

## Claims

1. A volumetric receiver assembly or unit (20) for use in a solar thermal power planet (10) having a receiver surface heated by radiation from the sun, said assembly comprises:
a volumetric absorber module (1) assembled from a monolith (1m) within a frame (1a) having an inlet and an outlet and a fluid permeable interior there between for passing an energy-carrying fluid medium such as a gas, e.g. air, through it, attached to
a support member (2) integrated with a funnel (3) having an inlet and an outlet and a fluid permeable interior there between for collecting the energy-carrying fluid medium leaving the outlet of the absorber module and passing it further on to a double membrane support structure (13) of a receiver housing,
**characterized in that** parts of the interior of the inlet of the support member (2) has the form of a hollow section with walls being parallel with less than 15° apart and integrated with a funnel (3) and at least a lower part (1a) of the outlet of the volumetric absorber module (1) has an outer form matching the interior of said support member form so as to fit loosely therein such that any mutual substantial mechanical and/or thermal stresses there between are avoided or eliminated even when heated to the operational temperature of the power plant, said volumetric absorber module (1) being attached to said support member (2) by mechanical locking arrangement (38, 48, 58, 68, 78, 88, 98, 108, 128, 138, 148) so as to be interchangeable therein.

2. A volumetric receiver assembly according to claim 1, **characterized in that** said locking arrangement securing mechanically said volumetric absorber module into said support member comprises:
a set of slots or grooves (44, 64, 74, 84, 104, 134) in the volumetric absorber module frame (41 a, 61a, 81a, 121a, 131a),
a set of integrated locks (38, 48, 58, 88, 98) in the support member (32, 42, 52, 82, 92) to grip and secure the volumetric absorber module releasable therein,
so that the volumetric absorber module is secured mechanically to the support member with the capability of being interchangeable.

3. A volumetric receiver assembly according to claim 1, **characterized in that** said locking arrangement securing mechanically the absorber modules into said support member comprises:
a set of slots or grooves (44, 64, 74, 104, 134) in the volumetric absorber module frame (41 a, 61a, 81a, 121a, 131a),
a set of slots (62s, 72s, 102s, 112s, 122s,132s, 142s) in the support member (62, 72, 102, 112, 122, 132, 142),
a set of locks or clips (68, 78, 108, 128, 138) to grip, hold and secure the volumetric absorber module to the support member,
so that the volumetric absorber module is secured mechanically to the support member without transferring thermal stresses and with the capability of being interchangeable.

4. A volumetric receiver assembly according to any of the claims 1-3, **characterized by** incorporating a wire mesh absorber module comprising:
a knitted metal wire monolithic body (141)
a metal plate reinforcement frame (141a)
a set of radial slots in the frame structure (141a)
said body being assembled into a volumetric absorber module and further secured mechanically to a support member.

5. A volumetric receiver assembly according to any of the claims 1-3, **characterized by** incorporating an absorber module comprising a number of woven metal wire fabrics being closely laminated into an absorber monolith (141) comprising:
a set of wire screens (141t, 141c) positioned radial
a reinforcement frame structure (141a)
a flat or dome shaped design (Fig. 14)
a set of radial slots in the frame structure
said a volumetric absorber module being assembled and secured mechanically to a support member.

6. A volumetric receiver assembly according to any of the claims 1-3, **characterized by** incorporating a silicon silicon carbide absorber module having a wall density greater than 2.9 x 10³ kg/m³ (2.9 g/cc) comprising:
a multi cell SiSiC ceramic monolithic body
an integrated thicker SiSiC ceramic circumference wall
slots in the ceramic circumference wall
said volumetric absorber module being secured mechanically to a support member.

7. A volumetric receiver assembly according to any of the claims 1-3, **characterized by** incorporating a ceramic absorber module comprising:
a ceramic foam, monolithic body which has been cast into a ceramic frame structure, and
radial slots in the circumference of the ceramic frame structure
said body being assembled and converted into SiSiC for forming a volumetric absorber module to be secured mechanically to a support member.

8. A volumetric receiver assembly according to any of the claims 1-3, **characterized by** incorporating a silicon silicon carbide absorber module having a wall density greater than 2.9 x 10³ kg/m³ (2.9 g/cc) and produced from corrugated carbon-containing fibre foil, sheet, fabric or paper, if necessary pyrollized/carbonized, said module comprises:
a corrugated basic material body
a reinforcement frame of similar material
radial extending slots in the frame structure circumference
said body bering assembled in the green stage and further converted info SiSiC for forming a volumetric absorber module to be secured mechanically to a support member in a later stage.

9. A volumetric receiver assembly according to claim 8, **characterized by** Incorporating an absorber module, said assembly being prepared from:
a monolith assembled from corrugated carbon containing foil, fabric, felt or paper alike materials having a thickness less than 2mm, preferably in the range of 0.1 - 1mm assembled with
a reinforcement frame from flat carbon containing foil, fabric, felt or paper alike sheet material surrounded and integrated with the absorber monolith having a thickness more than 0.5 mm, preferably in the range of 0.6 - 4mm, to form a green absorber module having
radial slots cut in the reinforcement frame followed by
a silicon metal infiltration to form an SiSiC body having a wall density greater than 2.9 x 10³ kg/m³ (2.9 g/cc) and
a dimension larger than 150mm on the absorber monolith front face.

10. A volumetric receiver assembly according to any of the preceding claims, **characterized by** having a design further allowing mixing of different sizes and shapes of the said volumetric absorber module.

11. A volumetric receiver assembly according to any of the preceding claims, **characterized by** allowing return airflow being adjusted independently for obtaining identical temperature outlet from each of the volumetric absorber module within differences of 50°C.

12. A volumetric receiver assembly according to any of the preceding claims, **characterized by** allowing improved return airflow entering the absorber monolith, which comprises either:
a slant at the edges of the monolith where the length of the internal channels in the monolith continually decreases towards the edges
areas of the monolith where the cross section of the channels increases in steps or continually towards the edges
a slant with continually shorter channels in the form of the mantle of a rotational pyramid shape.

13. A volumetric receiver assembly according to any of the preceding claims, **characterized by** being capable of resisting air outlet temperature higher than 700°C.

14. A volumetric receiver assembly according to any of the preceding claims, **characterized by** being capable of resisting air outlet temperature higher than 750°C.

15. A volumetric receiver assembly according to any of the preceding claims, **characterized by** being capable of resisting air outlet temperature higher than 800°C.

16. A volumetric receiver assembly according to any of the preceding claims, characterize by being capable of providing return airflow outlet temperature differences of less than 30°C.

17. A volumetric receiver assembly according to any of the preceding claims, **characterized by** comprising:
a metal honeycomb monolith produced from corrugated foil integrated with a metal frame being alloyed from at least metals such as iron, nickel, chromium and preferably amounts of aluminium and rare earth metal or alloyed with other compounds of elements of the main groups II to IV of the periodic system,
a matching section sheet metal support/funnel member having an outlet and being alloyed from at least metals such as iron, nickel, chromium and preferably aluminium and amounts of rare earth metal,
said metal absorber monolith being assembled with said matching metal support member/funnel by brazing or welding with LASER or alternatively with TIG or MIG at their circumferences so that a tight unit is obtained.

18. A volumetric receiver assembly according to any of the preceding claims, **characterized by** combining more than 100 individual VR-units, comprising:
a volumetric absorber module
a support member integrated with a funnel having an inlet and an outlet and being alloyed from at least metals such as iron, nickel, chromium and preferably aluminium and amounts of rare earth metal,
a set of slots in the volumetric absorber module
a set of clamping arrangements on the support member
said absorber modules being assembled with the support member without being fully gas tight.

19. A volumetric receiver assembly according to any of the preceding claims, **characterized in that** said assembly comprises:
volumetric receiver modules and supporting members integrated with their respective funnels being integrated on the double membrane air manifold of the receiver housing by welding or other mechanical rigid connection, thus
the support members/funnels having an inlet and an outlet and a fluid permeable interior there between for collecting the energy-carrying fluid medium leaving the outlet of the receiver body and passing it further on to the double membrane manifold, from
the volumetric absorber module mounted in each supporting member inlet hereby lowering system weight, thermal mass and complexity.

20. A volumetric receiver assembly according to any of the preceding claims, **characterized by** having locking arrangements securing mechanically the absorber modules into the support members, said assembly comprises:
a set of slots in the volumetric absorber module
a set of locking fingers in the support member to grip the volumetric absorber module
said absorber module being secured mechanically without welding or the like.

21. A volumetric receiver assembly according to any of the preceding claims, **characterized by** having locking arrangements securing mechanically the absorber modules into the support members, said assembly comprises:
a set of slots in the volumetric absorber module
a set of slots in the support member
a set of clips to grip, secure the volumetric absorber module
said absorber module being secured mechanically without any rigid integration providing for optional replacement.

22. A volumetric receiver assembly according to any of the claims 20 - 21, **characterized by** incorporating a wire mesh absorber module, said assembly comprises:
a knitted metal wire mesh body fitted intro
a metal plate frame forming an absorber module integrated
with slots in the frame

23. A volumetric receiver assembly according to any of the claims 20-21, **characterized by** incorporating an absorber module comprising a number of woven metal wire fabrics being closely laminated into an absorber monolith comprising:
a set of wire screens positioned radial
a reinforcement frame structure
a flat or dome shaped design
a set of radial slots in the frame structure
said a volumetric absorber module being assembled and secured mechanically to the support member.

24. A volumetric receiver assembly according to any of the claims 20-21, **characterized by** incorporating a corrugated foil or sheet absorber module, said assembly comprises:
a corrugated material body assembled, into
a reinforcement frame, incorporating
a set of slots in the frame

25. A volumetric receiver assembly according to any of the claims 20-21, **characterized by** incorporating a silicon silicon carbide absorber module, having a wall density greater than 2.9 x 10³ kg/m³ (2.9°g/cc) said assembly comprises:
a silicon silicon carbide ceramic monolithic body
a set of slots in the integrated ceramic frame circumference

26. A volumetric receiver assembly according to any of the claims 20-21, **characterized by** incorporating a ceramic absorber module, said assembly comprises:
a ceramic foam monolithic body, preferably cast into a frame structure
a set of slots in the ceramic frame structure circumference

27. A volumetric receiver assembly according to any of the preceding claims, **characterized by** incorporating a diffuser or mixer body inside the supporting member or funnel with the purpose of:
optimising the air flow through the volumetric absorber module by compensation for turbulent and non-laminar flow in the supporting member and funnel
so as to reduce local thermal overloading of the absorber module, protecting the absorber modules and hereby optimizing the absorber module lifetime.

28. A volumetric receiver assembly according to any of the preceding claims, **characterized by** incorporating a diffuser body and/or reflector body inside the supporting member or funnel outlet with the purpose of:
securing and protecting the manifold construction from thermal overheating
if the absorber module is damaged and concentrated solar radiation may otherwise pass into the funnel, manifold, double membranes and receiver housing internals.

29. A Solar Thermal Power Plant, **characterized by** comprising volumetric receiver assemblies units according to any of the claims 1 - 28, which allow mixing of different absorber materials depending an the insolation values on the receiver assembly surface.

30. A Solar Thermal Power Plant, **characterized by** comprising volumetric receiver assemblies units according to any of the claims 1 - 8, which allow mixing of different absorber materials according to claims 4 - 8, depending on the insolation values on the receiver assembly surface, such absorber modules being selected among:
a metal wire mesh volumetric absorber module
a metal felt volumetric absorber module
a metal wire screen fabric volumetric absorber module
a metal corrugated foil volumetric absorber module
a ceramic extruded honeycomb volumetric absorber module
a ceramic foam volumetric absorber module
a ceramic corrugated paper volumetric absorber module
said mixing of different volumetric absorber modules improves the total system efficiency.

## Patentansprüche

1. Volumetrische Empfängerbaugruppe oder -einheit (20) zum Gebrauch in einem solarthermischen Kraftwerk (10), die eine durch Strahlung von der Sonne erwärmte Empfängeroberfläche hat, wobei die Baugruppe Folgendes aufweist:
ein volumetrisches Absorbermodul (1), das aus einem Monolithen (1m) in einem Rahmen (1a) zusammengebaut ist und einen Einlass und einen Auslass und dazwischen ein fluiddurchlässiges Inneres zum Durchleiten eines Energieträger-Fluidmediums wie eines Gases, z. B. Luft, hat, wobei das Absorbermodul angebracht ist an
einem Tragelement (2), das mit einem Trichter (3) integriert ist und einen Einlass und einen Auslass und dazwischen ein fluiddurchlässiges Inneres hat, um das aus dem Auslass des Absorbermoduls austretende Energieträger-Fluidmedium zu sammeln und es auf eine Doppelmembran-Tragkonstruktion (13) eines Empfängergehäuses weiter zu leiten,
**dadurch gekennzeichnet, dass** Teile des Inneren des Einlasses des Tragelements (2) die Form eines Hohlprofils haben mit Wandungen, die parallel und weniger als 15° voneinander entfernt und mit einem Trichter (3) integriert sind, und wenigstens ein unterer Teil (1a) des Auslasses des volumetrischen Absorbermoduls (1) eine äußere Form hat, die an das Innere des Tragelements angepasst ist, so dass sie lose in dieses passt, so dass etwaige gegenseitigen erheblichen mechanischen und/oder thermischen Beanspruchungen zwischen ihnen auch bei Erwärmung auf die Betriebstemperatur des Kraftwerks vermieden oder beseitigt werden, wobei das volumetrische Absorbermodul (1) an dem Tragelement (2) durch eine mechanische Sicherungsanordnung (38, 48, 58, 68, 78, 88, 98, 108, 128, 138, 148) so befestigt ist, dass es darin austauschbar ist.

2. Volumetrische Empfängerbaugruppe nach Anspruch 1, **dadurch gekennzeichnet, dass** die Sicherungsanordnung, die das volumetrische Absorbermodul mechanisch in dem Tragelement sichert, Folgendes aufweist:
einen Satz von Schlitzen oder Nuten (44, 64, 74, 84, 104, 134) in dem volumetrischen Absorbermodulrahmen (41a, 61a, 81a, 121a, 131a),
einen Satz von integrierten Riegeln (38, 48, 58, 88, 98) in dem Tragelement (32, 42, 52, 82, 92), um das volumetrische Absorbermodul darin zu greifen und lösbar zu sichern,
so dass das volumetrische Absorbermodul mechanisch an dem Tragelement gesichert ist mit der Eigenschaft, austauschbar zu sein.

3. Volumetrische Empfängerbaugruppe nach Anspruch 1, **dadurch gekennzeichnet, dass** die Sicherungsanordnung, die das Absorbermodul mechanisch in dem Tragelement sichert, Folgendes aufweist:
einen Satz von Schlitzen oder Nuten (44, 64, 74, 104, 134) in dem volumetrischen Absorbermodulrahmen (41a, 61a, 81a, 121a, 131a),
einen Satz von Schlitzen (62s, 72s, 102s, 112s, 122s, 132s, 142s) in dem Tragelement (62, 72, 102, 112, 122, 132, 142),
einen Satz von Riegeln oder Clips (68, 78, 108, 128, 138), um das volumetrische Absorbermodul zu greifen, zu halten und an dem Tragelement zu sichern,
so dass das volumetrische Absorbermodul mechanisch an dem Tragelement gesichert ist, ohne thermische Beanspruchungen zu übertragen, und mit der Fähigkeit, austauschbar zu sein.

4. Volumetrische Empfängerbaugruppe nach einem der Ansprüche 1 bis 3, **dadurch gekennzeichnet, dass** sie ein Drahtnetz-Absorbermodul enthält, das Folgendes aufweist:
einen monolithischen Körper (141) aus gewirktem Metalldraht,
einen Verstärkungsrahmen (141 a) aus Metallplatten,
einen Satz radialer Schlitze in der Rahmenkonstruktion (141a),
wobei der Körper in ein volumetrisches Absorbermodul eingebaut und ferner mechanisch an einem Tragelement gesichert ist.

5. Volumetrische Empfängerbaugruppe nach einem der Ansprüche 1 bis 3, **dadurch gekennzeichnet, dass** sie ein Absorbermodul enthält, das eine Reihe von Metalldrahtgeweben aufweist, die dicht zu einem Absorbermonolithen (141) laminiert sind, der Folgendes aufweist:
einen Satz von radial positionierten Drahtsieben (141t, 141c),
eine Verstärkungsrahmenkonstruktion (141a),
eine flache oder kuppelförmige Ausbildung (Fig. 14),
einen Satz radialer Schlitze in der Rahmenkonstruktion,
wobei das volumetrische Absorbermodul zusammengebaut und mechanisch an einem Tragelement gesichert ist.

6. Volumetrische Empfängerbaugruppe nach einem der Ansprüche 1 bis 3, **dadurch gekennzeichnet, dass** sie ein Silizium-Silizium-Carbid-Absorbermodul enthält, das eine Wanddichte von größer als 2,9 x 10³kg/m³ (2,9 g/cc) hat und Folgendes aufweist:
einen monolithischen Körper aus vielzelliger SiSiC-Keramik,
eine integrierte dickere SiSiC-Keramik-Umfangswand,
Schlitze in der Keramik-Umfangswand,
wobei das volumetrische Absorbermodul mechanisch an einem Tragelement gesichert ist.

7. Volumetrische Empfängerbaugruppe nach einem der Ansprüche 1 bis 3, **dadurch gekennzeichnet, dass** es ein Keramik-Absorbermodul enthält, das Folgendes aufweist:
einen monolithischen Keramikschaumkörper, der zu einer Keramikrahmenkonstruktion gegossen ist,
Radialschlitze in dem Umfang der Keramikrahmenkonstruktion,
wobei der Körper zusammengebaut und zu SiSiC umgewandelt ist, um ein volumetrisches Absorbermodul zu bilden, das an einem Tragelement mechanisch zu sichern ist.

8. Volumetrische Empfängerbaugruppe nach einem der Ansprüche 1 bis 3, **dadurch gekennzeichnet, dass** sie ein Silizium-Silizium-Carbid-Absorbermodul enthält, das eine Wanddichte von größer als 2,9 x 10³kg/m³ (2,9 g/cc) hat und hergestellt ist aus gewellter kohlenstoffhaltiger Faserfolie, gewelltem Flächenkörper, gewelltem Gewebe oder gewelltem Papier, erforderlichenfalls pyrolisiert/karbonisiert, wobei das Modul Folgendes aufweist:
einen gewellten Grundmaterialkörper,
einen Verstärkungsrahmen aus gleichartigem Material,
radial verlaufende Schlitze in dem Umfang der Rahmenkonstruktion,
wobei der Körper in der Rohphase zusammengesetzt und weiter zu SiSiC umgewandelt ist zur Bildung eines volumetrischen Absorbermoduls, das in einem späteren Stadium mechanisch an einem Tragelement zu sichern ist.

9. Volumetrische Empfängerbaugruppe nach Anspruch 8, **dadurch gekennzeichnet, dass** sie ein Absorbermodul enthält, wobei die Baugruppe hergestellt ist aus:
einem Monolithen, der zusammengesetzt ist aus gewellter kohlenstoffhaltiger Folie, gewelltem Gewebe, gewelltem Filz oder gewelltem Papier oder ähnlichen Materialien mit einer Dicke von weniger als 2 mm, bevorzugt im Bereich von 0,1 bis 1 mm, zusammengebaut mit
einem Verstärkungsrahmen aus flacher kohlenstoffhaltiger Folie, Flachgewebe, flachem Filz oder papierähnlichem Flächenkörpermaterial, das von dem Absorbermonolithen umgeben und damit integriert ist und eine Dicke von mehr als 0,5 mm, bevorzugt in dem Bereich von 0,6 bis 4 mm, hat, um ein grünes Absorbermodul zu bilden, das
in den Verstärkungsrahmen geschnittene radiale Schlitze hat, gefolgt von
einer Silizium-Metallinfiltration zur Bildung eines SiSiC-Körpers, der eine Wanddichte von größer als 2,9 x 10³kg/m³ (2,9 g/cc) und
eine Dimension von größer als 150 mm an der Vorderseite des Absorbermonolithen hat.

10. Volumetrische Empfängerbaugruppe nach einem der vorhergehenden Ansprüche, **dadurch gekennzeichnet, dass** sie eine Konstruktion hat, die ferner ein Mischen unterschiedlicher Größen und Formen des volumetrischen Absorbermoduls zulässt.

11. Volumetrische Empfängerbaugruppe nach einem der vorhergehenden Ansprüche, **gekennzeichnet durch** Zulassen eines Rückluftstroms, der unabhängig einstellbar ist, um aus jedem der volumetrischen Absorbermodule einen identischen Temperaturaustritt innerhalb einer Differenz von 50 °C zu erzielen.

12. Volumetrische Empfängerbaugruppe nach einem der vorhergehenden Ansprüche, **gekennzeichnet durch** Zulassen eines verbesserten Rückluftstromeintritts in den Absorbermonolithen, der eines von den folgenden aufweist:
eine Schräge an den Rändern des Monolithen, wo die Länge der Innenkanäle in dem Monolithen zu den Rändern hin stetig abnimmt,
Bereiche des Monolithen, wo der Querschnitt der Kanäle zu den Rändern hin stufenweise oder stetig zunimmt,
eine Schräge mit fortlaufend kürzeren Kanälen in Form des Mantels einer Rotationspyramidengestalt.

13. Volumetrische Empfängerbaugruppe nach einem der vorhergehenden Ansprüche, **dadurch gekennzeichnet, dass** sie einer Luftaustrittstemperatur von mehr als 700 °C standhalten kann.

14. Volumetrische Empfängerbaugruppe nach einem der vorhergehenden Ansprüche, **dadurch gekennzeichnet, dass** sie einer Luftaustrittstemperatur von mehr als 750 °C standhalten kann.

15. Volumetrische Empfängerbaugruppe nach einem der vorhergehenden Ansprüche, **dadurch gekennzeichnet, dass** sie einer Luftaustrittstemperatur von mehr als 800 °C standhalten kann.

16. Volumetrische Empfängerbaugruppe nach einem der vorhergehenden Ansprüche, **dadurch gekennzeichnet, dass** sie Rückluftstrom-Austrittstemperaturdifferenzen von weniger als 30 °C ermöglichen kann.

17. Volumetrische Empfängerbaugruppe nach einem der vorhergehenden Ansprüche, **dadurch gekennzeichnet, dass** sie Folgendes aufweist:
einen wabenförmigen Metallmonolithen, hergestellt aus gewellter Folie, die mit einem Metallrahmen integriert ist, der mindestens aus Metallen wie Eisen, Nickel, Chrom und bevorzugt Mengen an Aluminium und Seltenerdmetall legiert ist oder mit anderen Verbindungen von Elementen der Hauptgruppen II bis IV des Periodensystems legiert ist,
ein querschnittsangepasstes Metallblech-Tragelement/-Trichterelement, das einen Auslass hat und mindestens aus Metallen wie Eisen, Nickel, Chrom und bevorzugt Aluminium und Mengen an Seltenerdmetall legiert ist,
wobei der Metall-Absorbermonolith mit dem angepassten Metalltragelement/- trichter zusammengebaut ist durch Hartlöten oder Schweißen mit LASER oder alternativ mit WIG- oder MIG-Schweißen an ihrem jeweiligen Umfang, so dass eine dichte Einheit erhalten wird.

18. Volumetrische Empfängerbaugruppe nach einem der vorhergehenden Ansprüche, **gekennzeichnet durch** die Kombination von mehr als 100 einzelnen volumetrischen Empfänger- bzw. VR-Einheiten, die Folgendes aufweisen:
ein volumetrisches Absorbermodul,
ein Tragelement, das mit einem Trichter integriert ist, der einen Einlass und einen Auslass hat und mindestens aus Metallen wie Eisen, Nickel, Chrom und bevorzugt Aluminium und Mengen an Seltenerdmetall legiert ist,
einen Satz Schlitze in dem volumetrischen Absorbermodul,
einen Satz Festlegeanordnungen an dem Tragelement,
wobei die Absorbermodule mit dem Tragelement zusammengebaut sind, ohne vollständig gasdicht zu sein.

19. Volumetrische Empfängerbaugruppe nach einem der vorhergehenden Ansprüche, **dadurch gekennzeichnet, dass** die Baugruppe Folgendes aufweist:
volumetrische Empfängermodule und mit ihren jeweiligen Trichtern integrierte Tragelemente, die an dem Doppelmembran-Luftverteiler des Empfängergehäuses durch Schweißen oder eine andere starre mechanische Verbindung integriert sind, so dass
die Tragelemente/Trichter einen Einlass und einen Auslass und dazwischen ein fluiddurchlässiges Inneres haben, um das Energieträger-Fluidmedium, das den Auslass des Empfängerkörpers verlässt, zu sammeln und es weiter zu dem Doppelmembran-Verteiler zu leiten aus
dem volumetrischen Absorbermodul, das in jedem Tragelement-Einlass angebracht ist, wodurch das Systemgewicht, die thermisch wirksame Masse und die Komplexität verringert sind.

20. Volumetrische Empfängerbaugruppe nach einem der vorhergehenden Ansprüche, **dadurch gekennzeichnet, dass** sie Sicherungsanordnungen hat, welche die Absorbermodule mechanisch in den Tragelementen sichern, wobei die Baugruppe Folgendes aufweist:
einen Satz Schlitze in dem volumetrischen Absorbermodul,
einen Satz Festlegefinger in dem Tragelement, um das volumetrische Absorbermodul zu greifen,
wobei das Absorbermodul ohne Schweißen oder dergleichen mechanisch gesichert ist.

21. Volumetrische Empfängerbaugruppe nach einem der vorhergehenden Ansprüche, **dadurch gekennzeichnet, dass** sie Festlegeanordnungen hat, welche die Absorbermodule mechanisch in den Tragelementen sichern, wobei die Baugruppe Folgendes aufweist:
einen Satz Schlitze in dem volumetrischen Absorbermodul,
einen Satz Schlitze in dem Tragelement,
einen Satz Clips, um das volumetrische Absorbermodul zu greifen und zu sichern,
wobei das Absorbermodul ohne jede starre Integration mechanisch gesichert ist, was eine fakultative Auswechslung ermöglicht.

22. Volumetrische Empfängerbaugruppe nach einem der Ansprüche 20 bis 21, **dadurch gekennzeichnet, dass** sie ein Drahtnetz-Absorbermodul enthält, wobei die Baugruppe Folgendes aufweist:
einen gewirkten Metalldrahtkörper, der eingepasst ist in
einen Metallplattenrahmen unter Bildung eines Absorbermoduls, das
mit Schlitzen in dem Rahmen integriert ist.

23. Volumetrische Empfängerbaugruppe nach einem der Ansprüche 20 bis 21, **dadurch gekennzeichnet, dass** sie ein Absorbermodul enthält, das eine Reihe von Metalldrahtgeweben aufweist, die dicht zu einem Absorbermonolithen laminiert sind, der Folgendes aufweist:
einen Satz von radial positionierten Drahtsieben,
eine Verstärkungsrahmenkonstruktion,
eine flache oder kuppelförmige Ausbildung,
einen Satz radialer Schlitze in der Rahmenkonstruktion,
wobei das volumetrische Absorbermodul mit dem Tragelement zusammengebaut und mechanisch daran gesichert ist.

24. Volumetrische Empfängerbaugruppe nach einem der Ansprüche 20 bis 21, **dadurch gekennzeichnet, dass** sie ein gewelltes Folien- oder gewelltes Flächenkörper-Absorbermodul enthält, wobei die Baugruppe Folgendes aufweist:
einen Wellenmaterialkörper, der eingebaut ist in
einen Verstärkungsrahmen, der
einen Satz Schlitze in dem Rahmen aufweist.

25. Volumetrische Empfängerbaugruppe nach einem der Ansprüche 20 bis 21, **dadurch gekennzeichnet, dass** sie ein Silizium-Silizium-Carbid-Absorbermodul enthält, das eine Wanddichte von größer als 2,9 x 10³kg/m³ (2,9 g/cc) hat, wobei die Baugruppe Folgendes aufweist:
einen monolithischen Körper aus Silizium-Silizium-Carbid-Keramik,
einen Satz Schlitze in dem Umfang des integrierten Keramikrahmens.

26. Volumetrische Empfängerbaugruppe nach einem der Ansprüche 20 bis 21, **dadurch gekennzeichnet, dass** sie ein Keramik-Absorbermodul enthält, wobei die Baugruppe Folgendes aufweist:
einen monolithischen Keramikschaumkörper, der bevorzugt zu einer Rahmenkonstruktion gegossen ist,
einen Satz Schlitze in dem Umfang der Keramikrahmenkonstruktion.

27. Volumetrische Empfängerbaugruppe nach einem der vorhergehenden Ansprüche, **dadurch gekennzeichnet, dass** sie im Inneren des Tragelements oder Trichters einen Diffusor- oder Mischerkörper enthält, der dem folgenden Zweck dient:
Optimierung des Luftstroms durch das volumetrische Absorbermodul durch Kompensation eines turbulenten und nichtlaminaren Stroms in dem Tragelement und Trichter,
um dadurch eine lokale thermische Überlastung des Absorbermoduls zu mindern, die Absorbermodule zu schützen und somit die Absorbermodul-Lebensdauer zu optimieren.

28. Volumetrische Empfängerbaugruppe nach einem der vorhergehenden Ansprüche, **dadurch gekennzeichnet, dass** sie im Inneren des Tragelement- oder Trichterauslasses einen Diffusorkörper und/oder Reflektorkörper enthält, der dem folgenden Zweck dient:
Sichern und Schützen der Verteilerkonstruktion vor thermischer Überhitzung,
wenn das Absorbermodul beschädigt ist und konzentrierte Sonnenstrahlung anderweitig in das Innere des Trichters, des Verteilers, der Doppelmembranen und des Empfängergehäuses gelangen kann.

29. Solarthermisches Kraftwerk, **dadurch gekennzeichnet, dass** es volumetrische Empfängerbaugruppen/-einheiten nach einem der Ansprüche 1 bis 28 aufweist, die in Abhängigkeit von den Isolierwerten an der Empfängerbaugruppenoberfläche das Mischen unterschiedlicher Absorbermaterialien zulassen.

30. Solarthermisches Kraftwerk, **dadurch gekennzeichnet, dass** es volumetrische Empfängerbaugruppen/-einheiten nach einem der Ansprüche 1 bis 8 aufweist, die ein Mischen unterschiedlicher Absorbermaterialien nach den Ansprüchen 4 bis 8 zulassen, und zwar in Abhängigkeit von den Isolierwerten an der Empfängerbaugruppenoberfläche, wobei diese Absorbermodule ausgewählt sind unter den folgenden:
einem volumetrischen Metalldrahtnetz-Absorbermodul,
einem volumetrischen Metallfilz-Absorbermodul,
einem volumetrischen Absorbermodul aus Metalldrahtsiebgewebe,
einem volumetrischen Absorbermodul aus gewellter Metallfolie,
einem volumetrischen Absorbermodul aus extrudierter Wabenkeramik,
einem volumetrischen Keramikschaum-Absorbermodul,
einem volumetrischen Absorbermodul aus gewelltem Keramikpapier,
wobei das Mischen unterschiedlicher volumetrischer Absorbermodule den Gesamtwirkungsgrad des Systems verbessert.

## Revendications

1. Ensemble ou unité de récepteur volumétrique (20) à utiliser dans une centrale thermique solaire (10) ayant une surface de récepteur chauffée par le rayonnement du soleil, ledit ensemble comprenant :
un module d'absorbeur volumétrique (1) assemblé à partir d'un monolithe (1m) dans un cadre (1a) ayant une entrée et une sortie entre lesquelles se trouve un intérieur perméable aux fluides pour y faire passer un milieu fluide porteur d'énergie tel qu'un gaz, par exemple de l'air, attaché à
un organe de support (2) équipé d'un entonnoir (3) ayant une entrée et une sortie entre lesquelles se trouve un intérieur perméable aux fluides pour collecter le milieu fluide porteur d'énergie quittant la sortie du module d'absorbeur et qui en sort pour aller sur une structure de support à membrane double (13) d'un logement de récepteur,
**caractérisé en ce que** des parties de l'intérieur de l'entrée de l'organe de support (2) ont la forme d'une section creuse avec des parois parallèles espacées de moins de 15° et équipée d'un entonnoir (3) et au moins une partie inférieure (1a) de la sortie du module d'absorbeur volumétrique (1) a une forme externe concordant avec l'intérieur de la forme dudit organe de support de façon à s'y ajuster de façon lâche de telle sorte que toute contrainte mécanique et/ou thermique substantielle mutuelle entre eux est évitée ou éliminée, même lors d'un chauffage à la température de service de la centrale électrique, ledit module d'absorbeur volumétrique (1) étant attaché audit organe de support (2) par un agencement de verrouillage mécanique (38, 48, 58, 68, 78, 88, 98, 108, 128, 138, 148) de façon à y être interchangeable.

2. Ensemble de récepteur volumétrique selon la revendication 1, **caractérisé en ce que** ledit agencement de verrouillage fixant mécaniquement ledit module d'absorbeur volumétrique dans ledit organe de support comprend :
un jeu de fentes ou rainures (44, 64, 74, 84, 104, 134) dans le cadre du module d'absorbeur volumétrique (41 a, 61 a, 8 1 a, 121a, 131a),
un jeu de verrous intégrés (38, 48, 58, 88, 98) dans l'organe de support (32, 42, 52, 82, 92) pour saisir et fixer le module d'absorbeur volumétrique libérable à l'intérieur,
de sorte que le module d'absorbeur volumétrique est fixé mécaniquement à l'organe de support avec la capacité d'être interchangeable.

3. Ensemble de récepteur volumétrique selon la revendication 1, **caractérisé en ce que** ledit agencement de verrouillage fixant mécaniquement les modules d'absorbeur dans ledit organe de support comprend :
un jeu de fentes ou rainures (44, 64, 74, 104, 134) dans le cadre du module d'absorbeur volumétrique (4 1 a, 6 1 a, 8 1 a, 121a, 131a),
un jeu de fentes (62s, 72s, 102s, 112s, 122s, 132s, 142s) dans l'organe de support (62, 72, 102, 112, 122, 132, 142),
un jeu de verrous ou pinces (68, 78, 108, 128, 138) pour saisir, maintenir et fixer le module d'absorbeur volumétrique sur l'organe de support,
de sorte que le volume d'absorbeur volumétrique est fixé mécaniquement à l'organe de support sans transférer les contraintes thermiques et avec la capacité d'être interchangeable.

4. Ensemble de récepteur volumétrique selon l'une quelconque des revendications 1 à 3, **caractérisé en ce qu'**il incorpore un module d'absorbeur en treillis métallique comprenant :
un corps monolithique en fil de métal réticulé (141)
un cadre de renforcement à plaque métallique (141a)
un j eu de fentes radiales dans la structure de cadre (141 a)
ledit corps étant assemblé dans un module d'absorbeur volumétrique et en outre fixé mécaniquement à un organe de support.

5. Ensemble de récepteur volumétrique selon l'une quelconque des revendications 1 à 3, **caractérisé en ce qu'**il incorpore un module d'absorbeur comprenant un certain nombre de treillis métalliques tissés qui sont stratifiés étroitement dans un monolithe d'absorbeur (141) comprenant :
un jeu de tamis métalliques (141t, 141c) positionnés radialement
une structure de cadre de renforcement (141a)
un motif de forme plate ou en dôme (figure 14)
un jeu de fentes radiales dans la structure de cadre
ledit module d'absorbeur volumétrique étant assemblé et fixé mécaniquement à un organe de support.

6. Ensemble de récepteur volumétrique selon l'une quelconque des revendications 1 à 3, **caractérisé en ce qu'**il incorpore un module d'absorbeur en silicium-carbure de silicium ayant une densité de paroi supérieure à 2,9 x 10⁻³kg/m³ (2,9 g/cm³) comprenant :
un corps monolithique en céramique SiSiC multicellule
une paroi de circonférence céramique en SiSiC plus épaisse intégrée
des fentes dans la paroi de circonférence céramique
ledit module d'absorbeur volumétrique étant fixé mécaniquement à un organe de support.

7. Ensemble de récepteur volumétrique selon l'une quelconque des revendications 1 à 3, **caractérisé en ce qu'**il incorpore un module d'absorbeur céramique comprenant :
un corps monolithique en mousse céramique qui a été coulé en une structure de cadre céramique, et
des fentes radiales dans la circonférence de la structure de cadre céramique
ledit corps étant assemblé et converti en SiSiC pour former un module d'absorbeur volumétrique à fixer mécaniquement à un organe de support.

8. Ensemble de récepteur volumétrique selon l'une quelconque des revendications 1 à 3, **caractérisé en ce qu'**il incorpore un module d'absorbeur en silicium-carbure de silicium ayant une densité de paroi supérieure à 2,9 x 10⁻³ kg/m³ (2,9 g/cm³) et produit à partir d'une pellicule, d'une feuille, d'un tissu ou de papier de fibres ondulées contenant du carbone, si nécessaire pyrolysé/carbonisé, ledit module comprenant :
un corps de matériau basique ondulé
un cadre de renforcement de matériau similaire
des fentes s'étendant radialement dans la circonférence de structure de cadre
ledit corps étant assemblé au stade vert et converti ensuite en SiSiC pour former un module d'absorbeur volumétrique à fixer mécaniquement à un organe de support à un stade ultérieur.

9. Ensemble de récepteur volumétrique selon la revendication 8, **caractérisé en ce qu'**il incorpore un module d'absorbeur, ledit ensemble étant préparé à partir :
d'un monolithe assemblé à partir d'une pellicule, d'un tissu, d'un feutre ou de papier ou matériaux similaires contenant du carbone ondulé, ayant une épaisseur inférieure à 2 mm, de préférence dans la gamme de 0,1 à 1 mm assemblé avec
un cadre de renforcement à partir d'un matériau de feuille de type pellicule, tissu, feuille ou papier contenant du carbone plat entouré et équipé du monolithe d'absorbeur ayant une épaisseur supérieure à 0,5 mm, de préférence dans la gamme de 0,6 à 4 mm, pour former un module d'absorbeur vert ayant
des fentes radiales coupées dans le cadre de renforcement, suivi par
une infiltration de métal de silicium pour former un corps en SiSiC ayant une densité de paroi supérieure à 2,9 x 10⁻³ kg/m³ (2,9 g/cm³) et
une dimension plus grande que 150 mm sur la face avant du monolithe d'absorbeur.

10. Ensemble de récepteur volumétrique selon l'une quelconque des revendications précédentes, **caractérisé en ce qu'**il possède un motif permettant en outre le mélange de différentes tailles et formes dudit module d'absorbeur volumétrique.

11. Ensemble de récepteur volumétrique selon l'une quelconque des revendications précédentes, **caractérisé en ce qu'**il permet à un écoulement d'air de retour d'être ajustée indépendamment pour obtenir une sortie de température identique de chacun des modules d'absorbeur volumétrique avec des différences inférieures à 50 °C.

12. Ensemble de récepteur volumétrique selon l'une quelconque des revendications précédentes, **caractérisé en ce qu'**il permet un meilleur écoulement d'air de retour entrant dans le monolithe absorbeur, qui comprend :
une pente aux bords du monolithe où la longueur des canaux internes dans le monolithe diminue continuellement vers les bords, ou
des zones du monolithe où la section transversale des canaux augmente par paliers ou continuellement vers les bords,
une pente avec des canaux continuellement plus courts sous la forme d'un manteau en forme de pyramide en rotation.

13. Ensemble de récepteur volumétrique selon l'une quelconque des revendications précédentes, **caractérisé en ce qu'**il capable de résister à une température de sortie d'air supérieure à 700 °C.

14. Ensemble de récepteur volumétrique selon l'une quelconque des revendications précédentes, **caractérisé en ce qu'**il capable de résister à une température de sortie d'air supérieure à 750 °C.

15. Ensemble de récepteur volumétrique selon l'une quelconque des revendications précédentes, **caractérisé en ce qu'**il capable de résister à une température de sortie d'air supérieure à 800 °C.

16. Ensemble de récepteur volumétrique selon l'une quelconque des revendications précédentes, **caractérisé en ce qu'**il capable de fournir des différences de température de sortie d' écoulement d'air de retour inférieures à 30 °C.

17. Ensemble de récepteur volumétrique selon l'une quelconque des revendications précédentes, **caractérisé en ce qu'**il comprend :
un monolithe métallique en nid d'abeilles produit à partir d'une pellicule ondulée équipée d'un cadre en métal allié à partir d'au moins des métaux tels que le fer, le nickel, le chrome et de préférence des quantités d'aluminium et de métal de terres rares ou allié avec d'autres composés d'éléments des groupes principaux II à IV du système périodique,
un organe de support/entonnoir métallique en feuille à section concordante ayant une sortie et étant allié à partir d'au moins des métaux tels que le fer, le nickel, le chrome et de préférence l'aluminium et des quantités de métal de terres rares,
ledit monolithe d'absorbeur en métal étant assemblé avec ledit organe de support/entonnoir en métal concordant par brasage fort ou soudage avec un laser ou en variante avec TIG ou MIG à leurs circonférences de sorte qu'une unité étanche est obtenue.

18. Ensemble de récepteur volumétrique selon l'une quelconque des revendications précédentes, **caractérisé en ce qu'**il combine plus de 100 unités VR individuelles, comprenant :
un module d'absorbeur volumétrique
un organe de support équipé d'un entonnoir ayant une entrée et une sortie et étant allié à partir d'au moins des métaux tels que le fer, le nickel, le chrome et de préférence l'aluminium et des quantités de métal de terres rares,
un jeu de fentes dans le module d'absorbeur volumétrique
un jeu d'agencements de serrage sur l'organe de support
lesdits modules d'absorbeur étant assemblés avec l'organe de support sans être totalement étanches aux gaz.

19. Ensemble de récepteur volumétrique selon l'une quelconque des revendications précédentes, **caractérisé en ce** ledit ensemble comprend :
des modules de récepteur volumétrique et des organes de support équipés de leurs entonnoirs respectifs qui sont intégrés sur le collecteur d'air à membrane double du logement de récepteur par soudage ou un autre raccordement rigide mécanique, ainsi
les organes de support/entonnoirs ayant une entrée et une sortie entre lesquelles se trouve un intérieur perméable aux fluides pour collecter le milieu fluide porteur d'énergie quittant la sortie du corps de récepteur et qui en sort pour aller sur le collecteur à membrane double, à partir
du module d'absorbeur volumétrique monté dans chaque entrée d'organe de support abaissant ainsi le poids, la masse thermique et la complexité du système.

20. Ensemble de récepteur volumétrique selon l'une quelconque des revendications précédentes, **caractérisé en ce qu'**il comporte des agencements de verrouillage fixant mécaniquement les modules d'absorbeur dans lés organes de support, ledit ensemble comprenant :
un jeu de fentes dans le module d'absorbeur volumétrique
un jeu de doigts de verrouillage dans l'organe de support pour saisir le module d'absorbeur volumétrique
ledit module d'absorbeur étant fixé mécaniquement sans soudage ou similaire.

21. Ensemble de récepteur volumétrique selon l'une quelconque des revendications précédentes, **caractérisé en ce qu'**il comporte des agencements de verrouillage fixant mécaniquement les modules d'absorbeur dans les organes de support, ledit ensemble comprenant :
un jeu de fentes dans le module d'absorbeur volumétrique
un jeu de fentes dans l'organe de support
un jeu de pinces pour saisir et fixer le module d'absorbeur volumétrique
ledit module d'absorbeur étant fixé mécaniquement sans aucune intégration rigide permettant un remplacement facultatif.

22. Ensemble de récepteur volumétrique selon l'une quelconque des revendications 20 à 21, **caractérisé en ce qu'**il incorpore un module d'absorbeur en treillis, ledit ensemble comprenant :
un corps en treillis de métal réticulé ajusté dans
un cadre à plaque métallique formant un module d'absorbeur équipé
de fentes dans le cadre.

23. Ensemble de récepteur volumétrique selon l'une quelconque des revendications 20 à 21, **caractérisé en ce qu'**il incorpore un module d'absorbeur comprenant un certain nombre de treillis métalliques tissés qui sont stratifiés étroitement dans un monolithe d'absorbeur comprenant :
un jeu de tamis métalliques positionnés radialement
une structure de cadre de renforcement
un motif de forme plate ou en dôme
un jeu de fentes radiales dans la structure de cadre
ledit un module d'absorbeur volumétrique étant assemblé et fixé mécaniquement à l'organe de support.

24. Ensemble de récepteur volumétrique selon l'une quelconque des revendications 20 à 21, **caractérisé en ce qu'**il incorpore un module d'absorbeur en pellicule ou feuille ondulée, ledit ensemble comprenant :
un corps de matériau ondulé assemblé dans
un cadre de renforcement, incorporant
un jeu de fentes dans le cadre.

25. Ensemble de récepteur volumétrique selon l'une quelconque des revendications 20 à 21, **caractérisé en ce qu'**il incorpore un module d'absorbeur en silicium-carbure de silicium, ayant une densité de paroi supérieure à 2,9 x 10⁻³ kg/m³ (2,9 g/cm³), ledit ensemble comprenant :
un corps monolithique en céramique de silicium-carbure de silicium
un jeu de fentes dans la circonférence de cadre céramique intégré.

26. Ensemble de récepteur volumétrique selon l'une quelconque des revendications 20 à 21, **caractérisé en ce qu'**il incorpore un module d'absorbeur céramique, ledit ensemble comprenant :
un corps monolithique en mousse céramique, de préférence coulé dans une structure de cadre
un jeu de fentes dans la circonférence de structure de cadre céramique.

27. Ensemble de récepteur volumétrique selon l'une quelconque des revendications précédentes, **caractérisé en ce qu'**il incorpore un corps de diffuseur ou mélangeur à l'intérieur de l'organe de support ou de l'entonnoir dans le but :
d'optimiser l'écoulement d'air à travers le module d'absorbeur volumétrique par compensation d'un écoulement turbulent et non laminaire dans l'organe de support et l'entonnoir
de façon à réduire la surcharge thermique locale du module d'absorbeur, protégeant les modules d'absorbeur et optimisant ainsi l'espérance de vie du module d'absorbeur.

28. Ensemble de récepteur volumétrique selon l'une quelconque des revendications précédentes, **caractérisé en ce qu'**il incorpore un corps de diffuseur et/ou un corps de réflecteur à l'intérieur de la sortie de l'organe de support ou de l'entonnoir dans le but :
de fixer et protéger la construction de collecteur contre une surchauffe thermique
si le module d'absorbeur est endommagé et le rayonnement solaire concentré peut par ailleurs passer à l'intérieur de l'entonnoir, du collecteur, des membranes doubles et du logement de récepteur.

29. Centrale thermique solaire, **caractérisée en ce qu'**elle comprend des unités d'assemblage de récepteur volumétrique selon l'une quelconque des revendications 1 à 28, qui permettent le mélange de matériaux d'absorbeur différents en fonction des valeurs d'isolation sur la surface de l'ensemble de récepteur.

30. Centrale thermique solaire, **caractérisée en ce qu'**elle comprend des unités d'assemblage de récepteur volumétrique selon l'une quelconque des revendications 1 à 8, qui permettent le mélange de matériaux d'absorbeur différents selon les revendications 4 à 8, en fonction des valeurs d'isolation de la surface de l'ensemble de récepteur, de tels modules d'absorbeur étant choisis parmi :
un module d'absorbeur volumétrique en treillis métallique
un module d'absorbeur volumétrique en feutre métallique
un module d'absorbeur volumétrique en treillis de tamis métallique
un module d'absorbeur volumétrique à pellicule ondulée métallique
un module d'absorbeur volumétrique en nid d'abeilles céramique extrudé
un module d'absorbeur volumétrique en mousse céramique
un module d'absorbeur volumétrique en papier ondulé céramique
ledit mélange des modules d'absorbeur volumétriques différents améliorant le rendement total du système.
